(19) Europäisches Patentamt
European Patent Office
Office européen des brevets

(11) **EP 4 357 818 A1**

(12) **EUROPEAN PATENT APPLICATION**
published in accordance with Art. 153(4) EPC

(43) Date of publication:
**24.04.2024 Bulletin 2024/17**

(21) Application number: **22837311.4**

(22) Date of filing: **06.04.2022**

(51) International Patent Classification (IPC):
**G01T 1/20** (2006.01)     **G01N 23/04** (2018.01)

(52) Cooperative Patent Classification (CPC):
**G01N 23/04; G01T 1/20**

(86) International application number:
**PCT/JP2022/017170**

(87) International publication number:
**WO 2023/281890 (12.01.2023 Gazette 2023/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.07.2021   JP 2021111609**

(71) Applicant: **Hamamatsu Photonics K.K.
Hamamatsu-shi, Shizuoka 435-8558 (JP)**

(72) Inventors:
• **ONISHI, Tatsuya
  Hamamatsu-shi, Shizuoka 435-8558 (JP)**
• **SUYAMA, Toshiyasu
  Hamamatsu-shi, Shizuoka 435-8558 (JP)**
• **TSUCHIYA, Satoshi
  Hamamatsu-shi, Shizuoka 435-8558 (JP)**

(74) Representative: **Hoffmann Eitle
Patent- und Rechtsanwälte PartmbB
Arabellastraße 30
81925 München (DE)**

(54) **RADIOGRAPHIC IMAGE ACQUIRING DEVICE, RADIOGRAPHIC IMAGE ACQUIRING SYSTEM, AND RADIOGRAPHIC IMAGE ACQUISITION METHOD**

(57)     An image acquiring device 1 includes a camera 10 that scans radiation passing through a subject in one direction and captures an image of the radiation to acquire an X-ray image, a scintillator layer 11 provided on the camera 10 to convert X-rays into light, and a control device 20 that executes noise removal processing of removing noise from the X-ray image. The camera 10 includes N (N is an integer equal to or greater than 2) pixels 72 arrayed in a direction orthogonal to the one direction to detect the light and output detection signals, and a readout circuit 73 that outputs the X-ray image by outputting the detection signal for each of the N pixels 72. The scintillator layer 11 includes P (P is an integer equal to or greater than 2) scintillator units 11a disposed separately to correspond to the N pixels 72 and a separation unit 11b disposed between the P scintillator units 11a.

*Fig.3*

## Description

## Technical Field

One aspect of an embodiment relates to a radiographic image acquiring device, a radiographic image acquiring system, and a radiographic image acquisition method.

## Background Art

Since the past, devices have been used to acquire the distribution of electromagnetic waves such as X-rays passing through a subject as image data by providing multiple rows of line sensors disposed orthogonally to the transport direction of the subject and adding detection data output from the multiple rows of line sensors. According to such devices, an integral exposure effect can be obtained in image data obtained by detecting electromagnetic waves passing through a subject.

## Citation List

## Patent Literature

[Patent Literature 1] Japanese Unexamined Patent Republication No. WO2019/082276
[Patent Literature 2] Japanese Unexamined Patent Publication No. 2019-158663

## Summary of Invention

## Technical Problem

In the conventional devices as described above, by adding detection data obtained from multiple rows of line sensors, signal values tend to improve and noise values also tend to increase in the addition results. Therefore, the S/N ratio of image data may not be sufficiently improved. In addition, there have been cases where the resolution of the image data obtained by using a scintillator is reduced.

Consequently, one aspect of an embodiment was contrived in view of such a problem, and an object thereof is to provide a radiographic image acquiring device, a radiographic image acquiring system, and a radiographic image acquisition method that make it possible to effectively improve the S/N ratio while increasing the resolution of a radiographic image.

## Solution to Problem

According to one aspect of an embodiment, there is provided a radiographic image acquiring device including: an imaging device configured to scan radiation passing through a subject in one direction and capture an image of the radiation to acquire a radiographic image; a scintillator layer provided on the imaging device to convert the radiation into light; and an image processing module configured to execute noise removal processing of removing noise from the radiographic image, wherein the imaging device includes N (N is an integer equal to or greater than 2) detection elements arrayed in a direction orthogonal to the one direction to detect the light and output detection signals, and a readout circuit configured to output the radiographic image by outputting the detection signal for each of the N detection elements, and the scintillator layer includes P (P is an integer equal to or greater than 2) scintillator units disposed separately to correspond to the N detection elements, and a separation unit disposed between the P scintillator units.

Alternatively, according to another aspect of the embodiment, there is provided a radiographic image acquiring system including: the radiographic image acquiring device; a source configured to irradiate the subject with radiation; and a transport device configured to transport the subject in the one direction with respect to the imaging device.

Alternatively, according to another aspect of the embodiment, there is provided a radiographic image acquisition method including: a step of scanning scintillation light corresponding to radiation passing through a subject in one direction and capturing an image of the scintillation light to acquire a radiographic image; and a step of executing noise removal processing of removing noise from the radiographic image, wherein the acquisition step includes outputting the radiographic image by using an imaging device including N (N is an integer equal to or greater than 2) detection elements arrayed in a direction orthogonal to the one direction to detect the light and output detection signals, and a scintillator layer for converting the radiation into light which includes P (P is an integer equal to or greater than 2) scintillator units disposed separately to correspond to the N detection elements and a separation unit disposed between the P scintillator units, to output the detection signal for each of the N detection elements.

According to the one aspect or the other aspects, the scintillation light corresponding to radiation passing through the subject is detected by the N detection elements arrayed in a direction orthogonal to the scanning direction of the subject, and the detection signals from the N detection elements are output, thereby outputting a radiographic image. In this case, the radiation passing through the subject is converted into scintillation light by the P scintillator units disposed separately, and the scintillation light from the P scintillator units is detected by the N detection elements. Additionally, noise removal processing is performed on the output radiographic image and thus noise is removed. In this way, by using the scintillator units separated corresponding to the detection elements, it is possible to increase the resolution of the radiographic image, and to effectively improve the S/N ratio in the radiographic image.

**Advantageous Effects of Invention**

According to the embodiment, it is possible to effectively improve the S/N ratio while increasing the resolution of a radiographic image.

**Brief Description of Drawings**

FIG. 1 is a schematic configuration diagram of an image acquiring device 1 according to a first embodiment.
FIG. 2 is a plan view illustrating a configuration of a scan camera 12 in FIG. 1.
FIG. 3 is a diagram illustrating a configuration of a scintillator layer 11 disposed on the scan camera 12.
FIG. 4 is a block diagram illustrating an example of a hardware configuration of a control device 20 in FIG. 1.
FIG. 5 is a block diagram illustrating a functional configuration of the control device 20 in FIG. 1.
FIG. 6 is a diagram illustrating an example of an X-ray image acquired by an image acquisition unit 203 in FIG. 5.
FIG. 7 is a diagram illustrating an example of generation of a noise standard deviation map which is performed by a noise map generation unit 204 in FIG. 5.
FIG. 8 is a diagram illustrating an example of input and output data of a trained model 207 in FIG. 5.
FIG. 9 is a diagram illustrating an example of a training image which is one piece of training data used to build the trained model 207.
FIG. 10 is a flowchart illustrating a procedure of creating image data which is training data used to build the trained model 207 by a building unit 206.
FIG. 11 is a flowchart illustrating a procedure of observation processing performed by the image acquiring device 1.
FIG. 12 is a block diagram illustrating a functional configuration of a control device 20A according to a modification example of the present disclosure.
FIG. 13 is a flowchart illustrating a procedure of observation processing performed by an image acquiring device 1 according to the modification example of the present disclosure.
FIG. 14 is a graph illustrating an example of simulation calculation results of the energy spectrum of transmitted X-rays obtained by a calculation unit 202A in FIG. 12.
FIG. 15 is a table illustrating an example of simulation calculation results of a relationship between the thickness of a subject and average energy and transmittance obtained by the calculation unit 202A in FIG. 12.
FIG. 16 is a graph illustrating an example of simulation calculation results of a relationship between the thickness of a subject and the transmittance of X-rays obtained by the calculation unit 202A in FIG. 12.
FIG. 17 is a graph illustrating an example of simulation calculation results of a relationship between the thickness of a subject and average energy of transmitted X-rays obtained by the calculation unit 202A in FIG. 12.
FIG. 18 is a graph illustrating an example of simulation calculation results of a relationship between the pixel value of an X-ray image and average energy obtained by the calculation unit 202A of FIG. 12.
FIG. 19 is a graph illustrating an example of simulation calculation results of a relationship between the pixel value of an X-ray image and the standard deviation of noise values.
FIG. 20 is a graph illustrating an example of a relationship between the pixel value and the standard deviation of noise values in a case where the material of a subject changes, which is derived by the calculation unit 202A in FIG. 12.
FIG. 21 is a block diagram illustrating a functional configuration of a control device 20B according to another modification example of the present disclosure.
FIG. 22 is a flowchart illustrating a procedure of observation processing performed by an image acquiring device 1 according to the other modification example of the present disclosure.
FIG. 23 is a diagram illustrating an example of generation of a noise standard deviation map which is performed by a noise map generation unit 204B in FIG. 21.

FIG. 24 is a perspective view illustrating an example of a structure of a jig used for image capturing in the image acquiring device 1 according to the other modification example of the present disclosure.

FIG. 25 is a diagram illustrating an example of a captured image of the jig in FIG. 24.

FIG. 26 is a block diagram illustrating a functional configuration of a control device 20C according to a second embodiment.

FIG. 27 is a diagram illustrating an example of image data which is training data used to build a trained model 206C in FIG. 26.

FIG. 28 is a diagram illustrating an example of an X-ray transmission image to be analyzed by a selection unit 204C in FIG. 26.

FIG. 29 is a diagram illustrating an example of a thickness-luminance characteristic graph acquired by the selection unit 204C in FIG. 26.

FIG. 30 is a diagram illustrating an example of a luminance-SNR characteristic graph acquired by the selection unit 204C in FIG. 26.

FIG. 31 is a diagram illustrating a function of selection of a trained model based on image characteristics which is performed by the selection unit 204C in FIG. 26.

FIG. 32 is a diagram illustrating an example of an X-ray transmission image used to evaluate resolution by the selection unit 204C in FIG. 26.

FIG. 33 is a perspective view illustrating an example of a structure of a jig used to evaluate a luminance-to-noise ratio by the selection unit 204C in FIG. 26.

FIG. 34 is a diagram illustrating an X-ray transmission image after noise removal processing obtained for the jig in FIG. 33.

FIG. 35 is a flowchart illustrating a procedure of observation processing using an image acquiring device 1 according to the second embodiment.

FIG. 36 is a block diagram illustrating a functional configuration of a control device 20D according to a modification example of the second embodiment.

FIG. 37 is a flowchart illustrating a procedure of observation processing using an image acquiring device 1 according to the modification example of the second embodiment.

FIG. 38 is a block diagram illustrating a functional configuration of a control device 20E according to a third embodiment.

FIG. 39 is a diagram illustrating an example of image data which is training data used to build the trained model 206E in FIG. 38.

FIG. 40 is a diagram illustrating an example of an X-ray transmission image to be analyzed by the specification unit 202E in FIG. 38.

FIG. 41 is a diagram illustrating an example of a thickness-luminance characteristic graph acquired by the specification unit 202E in FIG. 38.

FIG. 42 is a diagram illustrating an example of a luminance-SNR characteristic graph acquired by the specification unit 202E in FIG. 38.

FIG. 43 is a diagram illustrating an example of an X-ray transmission image used to evaluate resolution by the specification unit 202E in FIG. 38.

FIG. 44 is a diagram illustrating a function of selection of a trained model based on image characteristics which is performed by the selection unit 204E in FIG. 38.

FIG. 45 is a perspective view illustrating an example of a structure of a jig used to evaluate a luminance-to-noise ratio by the selection unit 204E in FIG. 38.

FIG. 46 is a diagram illustrating an X-ray transmission image after noise removal processing obtained for the jig in FIG. 45.

FIG. 47 is a flowchart illustrating a procedure of observation processing using an image acquiring device 1 according to the third embodiment.

FIG. 48 is a plan view illustrating a configuration of a scan camera 12A according to a modification example.

FIG. 49 is a diagram illustrating a configuration of a scintillator layer 11A disposed on the scan camera 12A.

## Description of Embodiments

Hereinafter, embodiments of the present disclosure will be described in detail with reference to the accompanying drawings. Meanwhile, in the description, the same elements or elements having the same function are denoted by the same reference signs, and thus duplicate description will be omitted.

[First embodiment]

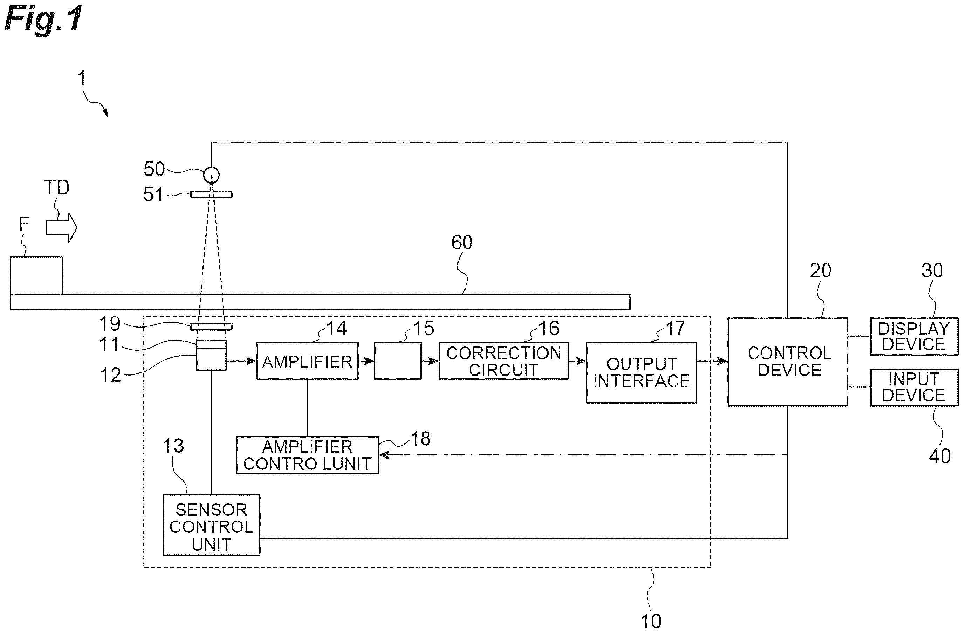

FIG. 1 is a configuration diagram of an image acquiring device 1 which is a radiographic image acquiring device and a radiographic image acquiring system according to the present embodiment. As shown in FIG. 1, the image acquisition device 1 is a device that irradiates a subject F transported in a transport direction TD with X-rays (radiation) and acquires an X-ray transmission image (radiographic image) obtained by capturing an image of the subject F on the basis of the X-rays passing through the subject F. The image acquisition device 1 performs a foreign substance inspection, a weight inspection, a product inspection, or the like on the subject F using an X-ray transmission image, and examples of the application include a food inspection, a baggage inspection, a substrate inspection, a battery inspection, a material inspection, and the like. The image acquisition device 1 is configured to include a belt conveyor (transport device) 60, an X-ray irradiator (radiation source) 50, an X-ray detection camera (imaging device) 10, a control device (image processing module) 20, a display device 30, and an input device 40 for performing various inputs. Meanwhile, the radiographic image in the embodiment of the present disclosure is not limited to an X-ray image, and may also be an image caused by ionizing radiation other than X-rays such as γ-rays.

The belt conveyor 60 has a belt portion on which the subject F is placed, and transports the subject F in the transport direction (one direction) TD at a predetermined transport speed by moving the belt portion in the transport direction TD. The transport speed of the subject F is, for example, 48 m/min. The belt conveyor 60 can change the transport speed as necessary to a transport speed such as, for example, 24 m/min or 96 m/min. In addition, the belt conveyor 60 can appropriately change the height position of the belt portion to change a distance between the X-ray irradiator 50 and the subject F. Meanwhile, examples of the subject F transported by the belt conveyor 60 include foodstuffs such as meat, seafood, agricultural products, or confectionery, rubber products such as tires, resin products, metal products, resource materials such as minerals, waste, and various products such as electronic parts or electronic substrates. The X-ray irradiator 50 is a device that radiates (outputs) X-rays to the subject F as an X-ray source. The X-ray irradiator 50 is a point light source, and diffuses and radiates the X-rays in a predetermined angle range in a fixed irradiation direction. The X-ray irradiator 50 is disposed above the belt conveyor 60 at a predetermined distance from the belt conveyor 60 so that the irradiation direction of the X-rays is directed toward the belt conveyor 60 and the diffused X-rays extend in the entire width direction of the subject F (a direction intersecting the transport direction TD). In addition, in the lengthwise direction of the subject F (a direction parallel to the transport direction TD), the irradiation range of the X-ray irradiator 50 is set as a predetermined division range in the lengthwise direction, and the X-rays are radiated in the entire lengthwise direction of the subject F by the subject F being transported in the transport direction TD by the belt conveyor 60. The X-ray irradiator 50 has its tube voltage and tube current set by the control device 20, and irradiates the belt conveyor 60 with X-rays having predetermined energy and a radiation dose according to the set tube voltage and tube current. In addition, a filter 51 that transmits a predetermined wavelength region of the X-rays is provided in the vicinity of the X-ray irradiator 50 on the belt conveyor 60 side.

The X-ray detection camera 10 detects X-rays passing through the subject F among the X-rays radiated to the subject F by the X-ray irradiator 50, and acquires and outputs a detection signal based on the X-rays. The image acquiring device 1 according to the present embodiment sequentially or simultaneously outputs detection signals based on the X-rays passing through the subject F transported by the belt conveyor 60, to thereby output an X-ray transmission image captured by scanning the X-ray transmission image in the transport direction TD.

The X-ray detection camera 10 includes a filter 19, a scintillator layer 11, a scan camera 12, a sensor control unit 13, an amplifier 14, an AD converter 15, a correction circuit 16, an output interface 17, and an amplifier control unit 18. The scan camera 12, the amplifier 14, the AD converter 15, the correction circuit 16, and the output interface 17 are electrically connected to each other.

The scintillator layer 11 is fixed on the scan camera 12 by adhesion or the like and, converts the X-rays passing through the subject F into scintillation light (the detailed configuration will be described later). The scintillator layer 11 outputs the scintillation light to the scan camera 12. The filter 19 transmits a predetermined wavelength region of the X-rays toward the scintillator layer 11.

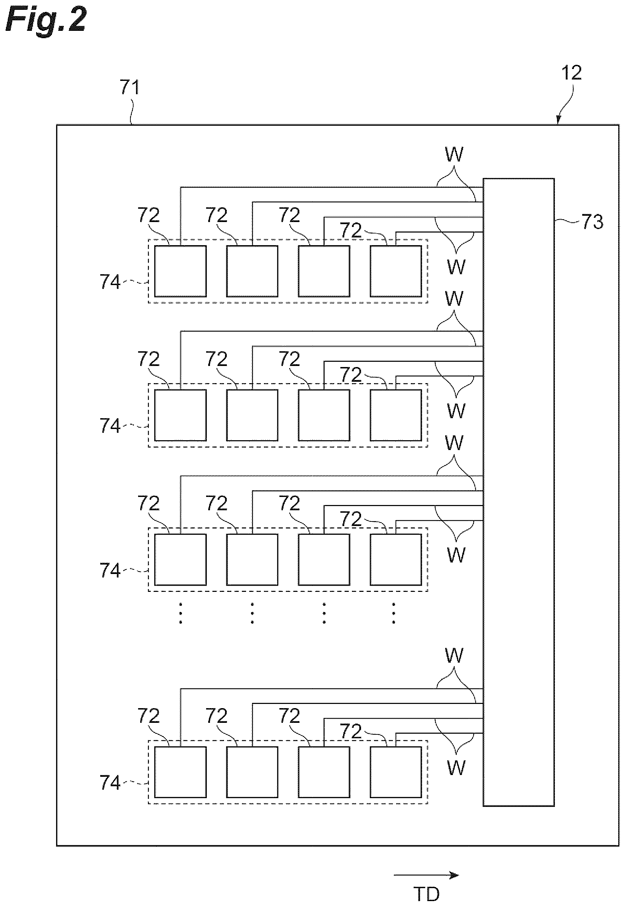

The scan camera 12 detects the scintillation light from the scintillator layer 11, converts the detected light into electric charge, and outputs it as a detection signal (electrical signal) to the amplifier 14. FIG. 2 is a plan view illustrating a configuration of the scan camera 12. As shown in FIG. 2, the scan camera 12 includes a plurality of pixels (detection elements) 72 which are photodiodes (photoelectric conversion elements) arrayed two-dimensionally on a substrate 71, a readout circuit 73 that outputs to the outside a detection signal output by the plurality of pixels 72 photoelectrically converting the scintillation light, and a wiring portion W that electrically connects the readout circuit 73 and each of the plurality of pixels 72.

Specifically, the scan camera 12 has a configuration in which pixel lines (pixel groups) 74 consisting of M (M is an integer equal to or greater than 2) pixels 72 arrayed in the transport direction TD are arrayed on the substrate 71 in N columns (N is an integer equal to or greater than 2) in a direction substantially orthogonal to the transport direction TD. For example, the number of pixels M is four and the number of pixel lines N is any integer equal to or greater than 200 and equal to or less than 30,000.

The readout circuit 73 sequentially receives detection signals output at intervals of a predetermined detection period (details will be described later) from the M pixels 72 for each pixel line 74 under control of the sensor control unit 13, performs processing of adding (summing up) the detection signals of at least two pixels 72 (addition processing) among the detection signals from the M pixels 72, combines the detection signals on which the addition processing has been performed for each pixel line 74, and outputs it to the outside as a detection signal for one line of the subject F orthogonal to the transport direction TD. Meanwhile, the addition processing in the present embodiment also includes average processing in which the detection signals of at least two pixels 72 are added to obtain an average value. In the present embodiment, the readout circuit 73 performs the addition processing on all M detection signals. Additionally, the readout circuit 73 outputs a detection signal of the next one line of the subject F orthogonal to the transport direction TD by performing the addition processing on the detection signals sequentially output from the M pixels 72 with a predetermined detection period shifted. In the same way, the readout circuit 73 sequentially or simultaneously outputs detection signals for a plurality of lines of the subject F orthogonal to the transport direction TD.

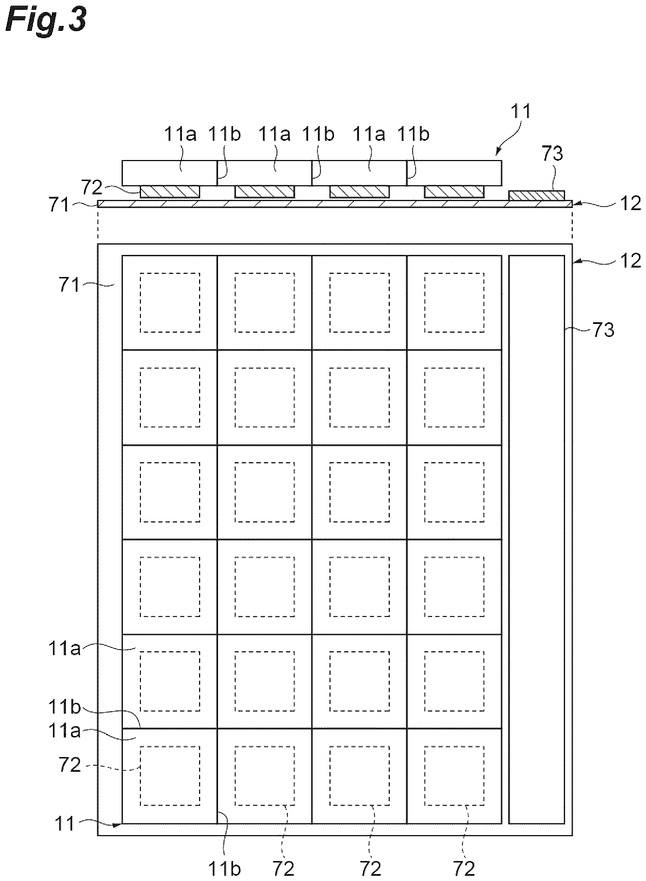

The configuration of the scintillator layer 11 disposed on the scan camera 12 having the above configuration will be described. FIG. 3 is a diagram illustrating the configuration of the scintillator layer 11, with the top showing a cross-sectional view in the transport direction TD, and the bottom showing a plan view from the surface of the substrate 71 on the pixel 72 side. In this way, the scintillator layer 11 is configured such that $M \times P$ (P is an integer equal to or greater than 2) rectangular scintillator units 11a disposed separately to correspond to the pixels 72 lined up in $M \times N$ units in the transport direction TD and a direction perpendicular to the transport direction TD, and a separation unit 11b located between these scintillator units 11a are formed. Meanwhile, the number P may be equal to or greater than 2 and equal to or less than N. Further, the number P may be an integer equal to or greater than 2, and may be an integer obtained by dividing N by an integer. In this case, blurring due to spread of light can be suppressed according to the interval between the separation units 11b of the scintillator layer 11. In addition, the number P may be an integer greater than N. In this case, although the interval between the separation units 11b of the scintillator layer 11 is smaller than the interval between the plurality of pixels 72, alignment of the scintillator layer 11 and the plurality of pixels 72 becomes easier. In the present embodiment, for example, the relation of P = N is established, but there is no limitation thereto.

The $M \times P$ scintillator units 11a are constituted by a scintillator material capable of converting incident X-rays into scintillation light, and are disposed to cover the entire pixel 72 corresponding to each of them. The separation units 11b are formed in a mesh shape so as to partition the $M \times P$ scintillator units 11a, and are constituted by a material capable of shielding the scintillation light. In addition, the separation units 11b may include a material that reflects the scintillation light. Further, the separation units 11b may be constituted by a material capable of shielding radiation. As the materials constituting such a scintillator layer 11 and a method of manufacturing the scintillator layer 11, for example, materials and manufacturing methods disclosed in Japanese Unexamined Patent Publication No. 2001-99941 or Japanese Unexamined Patent Publication No. 2003-167060 can be used. However, the materials of the scintillator layer 11 and manufacturing methods therefor are not limited to those disclosed in these documents.

The sensor control unit 13 controls the scan camera 12 to repeatedly capture images at a predetermined detection period so that all the pixels 72 in a pixel line 74 in the scan camera 12 can capture an image of X-rays passing through the same region of the subject F. The predetermined detection period may be set on the basis of the pixel width of the pixels 72 in the pixel line 74 in the scan camera 12. As the predetermined detection period, for example, a shift (delay time) in a detection timing of the pixels 72 in the pixel line 74 in the scan camera 12 may be specified on the basis of the distance between the pixels 72 in the pixel line 74 in the scan camera 12, the speed of the belt conveyor 60, the distance between the X-ray irradiator 50 and the subject F on the belt conveyor 60 (focus object distance (FOD)), and the distance between the X-ray irradiator 50 and the scan camera 12 (focus detector distance (FDD)), and the predetermined detection period may be set on the basis of the shift.

The amplifier 14 amplifies the detection signal at a predetermined set amplification factor to generate an amplified signal, and outputs the amplified signal to the AD converter 15. The set amplification factor is an amplification factor which is set by the amplifier control unit 18. The amplifier control unit 18 sets the set amplification factor of the amplifier 14 on the basis of predetermined imaging conditions.

The AD converter 15 converts the amplified signal (voltage signal) output by the amplifier 14 into a digital signal, and outputs the converted signal to the correction circuit 16. The correction circuit 16 performs a predetermined correction such as signal amplification on the digital signal, and outputs the corrected digital signal to the output interface 17. The output interface 17 outputs the digital signal to the outside of the X-ray detection camera 10.

The control device 20 is a computer such as, for example, a personal computer (PC). The control device 20 generates an X-ray transmission image on the basis of digital signals (amplified signals) corresponding to a plurality of lines of detection signals sequentially or simultaneously output from the X-ray detection camera 10 (more specifically, the output interface 17). In the present embodiment, the control device 20 generates one X-ray transmission image on the basis of 128 lines of digital signals output from the output interface 17. The generated X-ray transmission image is output to the display device 30 after noise removal processing to be described later is performed, and is displayed by the display device 30. In addition, the control device 20 controls the X-ray irradiator 50, the amplifier control unit 18, and the sensor control unit 13. Meanwhile, the control device 20 of the present embodiment is a device provided independently outside the X-ray detection camera 10, but may be integrated inside the X-ray detection camera 10.

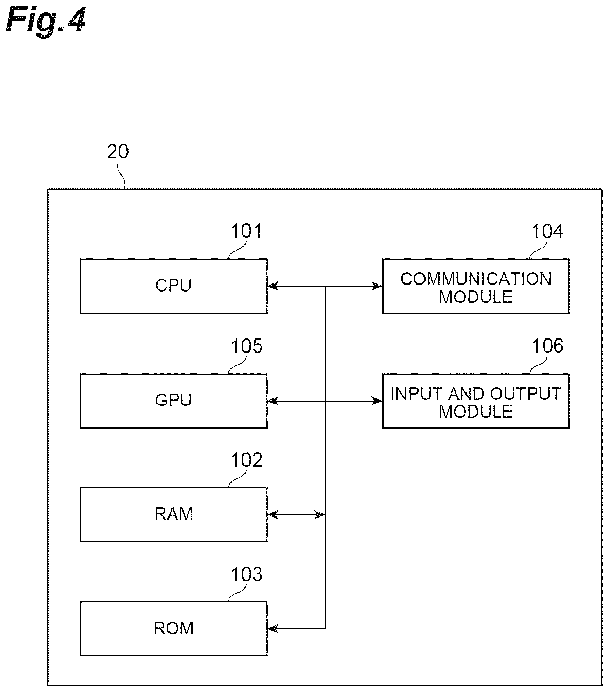

FIG. 4 shows a hardware configuration of the control device 20. As shown in FIG. 4, the control device 20 is a computer or the like physically including a central processing unit (CPU) 101 and graphic processing unit (GPU) 105 which are processors, a random access memory (RAM) 102 and a read only memory (ROM) 103 which are recording media, a communication module 104, an input and output module 106, and the like, which are electrically connected to each other. Meanwhile, the control device 20 may include a display, a keyboard, a mouse, a touch panel display, and the like as the input device 40 and the display device 30, or may include a data recording device such as a hard disk drive or a semiconductor memory. In addition, the control device 20 may be constituted by a plurality of computers.

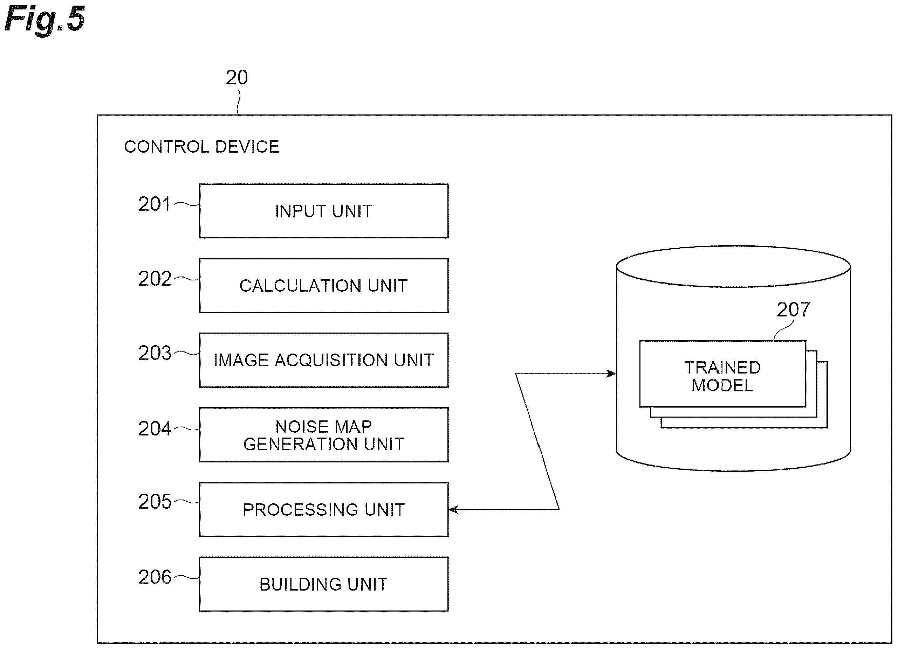

FIG. 5 is a block diagram illustrating a functional configuration of the control device 20. The control device 20 includes an input unit 201, a calculation unit 202, an image acquisition unit 203, a noise map generation unit 204, a processing unit 205, and a building unit 206. Each functional unit of the control device 20 shown in FIG. 5 is realized by loading a program (a radiographic image processing program of the first embodiment) on the hardware such as the CPU 101, the GPU 105, and the RAM 102 to thereby bring the communication module 104, the input and output module 106, and the like into operation under the control of the CPU 101 and the GPU 105 and read out and write data in the RAM 102. The CPU 101 and the GPU 105 of the control device 20 cause the control device 20 to function as each functional unit in FIG. 5 by executing this computer program, and sequentially execute processing corresponding to a radiographic image acquisition processing method to be described later. Meanwhile, the CPU 101 and the GPU 105 may be a single piece of hardware, or only one may be used. In addition, the CPU 101 and the GPU 105 may be implemented in a programmable logic such as an FPGA like a soft processor. The RAM or the ROM may also be a single piece of hardware, or may be built into a programmable logic such as an FPGA. Various types of data required for executing this computer program and various types of data generated by executing this computer program are all stored in a built-in memory such as the ROM 103 or the RAM 102, or a storage medium such as a hard disk drive. In addition, a built-in memory or a storage medium in the control device 20 stores in advance a trained model 207 which is read by the CPU 101 and the GPU 105 and causes the CPU 101 and the GPU 105 to execute noise removal processing on an X-ray image (X-ray transmission image) (which will be described later).

The details of the function of each functional unit of the control device 20 will be described below.

The input unit 201 accepts an input of condition information indicating either the conditions of the radiation source or the imaging conditions when radiation is radiated to capture an image of the subject F. Specifically, the input unit 201 accepts an input of condition information indicating the operating conditions of the X-ray irradiator (radiation source) 50 when the X-ray image of the subject F is captured, the imaging conditions of the X-ray detection camera 10, or the like from a user of the image acquisition device 1. Examples of the operating conditions include all or some of a tube voltage, a target angle, a target material, and the like. Examples of the condition information indicating the imaging conditions include all or some of the material and thickness of the filters 51 and 19 disposed between the X-ray irradiator 50 and the X-ray detection camera 10, the distance (FDD) between the X-ray irradiator 50 and the X-ray detection camera 10, the type of window material of the X-ray detection camera 10, and all or some of information relating to the material and thickness of the scintillator layer 11 of the X-ray detection camera 10, X-ray detection camera information (for example, a gain setting value, a circuit noise value, an amount of saturated charge, a conversion coefficient value (e-/count), and the line rate (Hz) or line speed (m/min) of the camera), information on the subject F, and the like. The input unit 201 may accept an input of the condition information as a direct input of information such as numerical values, or may accept the input as a selective input for information such as numerical values which are set in an internal memory in advance. The input unit 201 accepts the input of the above condition information from a user, but it may acquire some condition information (such as a tube voltage) in accordance with the detection result of the state of control performed by the control device 20.

The calculation unit 202 calculates the average energy related to the X-rays (radiation) passing through the subject F on the basis of the condition information. The condition information includes at least any one of the tube voltage of the source, information relating to the subject F, information on a filter included in a camera used to capture an image of the subject F, information on a scintillator included in the camera, and information on a filter included in the X-ray source. Specifically, the calculation unit 202 calculates the value of the average energy of X-rays passing through the subject F and detected by the X-ray detection camera 10 using the image acquisition device 1 on the basis of the condition information whose input is accepted by the input unit 201. For example, the calculation unit 202 calculates an X-ray spectrum detected by the X-ray detection camera 10 using, for example, a known Tucker approximation or the like on the basis of information such as a tube voltage, a target angle, a target material, the material and thickness of the filters 51 and 19 and their presence or absence, the type of window material of the X-ray detection camera 10 and its presence or absence, and the material and thickness of the scintillator layer 11 of the X-ray detection camera 10 which are included in the condition information. The calculation unit 202 further calculates a spectral intensity integral value and a photon number integral value from the spectrum of the X-rays, and calculates the value of the average energy of the X-rays by dividing the spectral intensity integral value by the photon number integral value.

A calculation method using a known Tucker approximation will be described. For example, in a case where the target is specified as tungsten and the target angle is specified as 25°, the calculation unit 202 can determine Em: kinetic energy during electron target collision, T: electron kinetic energy in the target, A: proportionality constant determined by the atomic number of the target substance, ρ: the density of the target, μ(E): the linear attenuation coefficient of the target substance, B: the function of Z and T that changes gently, C: the Thomson-Whiddington constant, θ: the target angle, and c: the speed of light in vacuum. Further, the calculation unit 202 can calculate an irradiation X-ray spectrum by calculating the following Formula (1) on the basis of these values.

[Math. 1]

$$\varphi(E) = A \cdot \int_E^{Em} \left(\frac{T + m_0 c^2}{T}\right) \cdot B \cdot \left(\frac{1}{\rho}\frac{dT}{dx}\right)^{-1} exp\left\{-\mu(E)\frac{(E_m^2 - T^2)}{\rho C \sin(\theta + \varphi)}\right\} dT \quad (1)$$

Meanwhile, Em can be determined from information on the tube voltage, A, ρ, and μ(E) can be determined from information on the material of the subject F, and θ can be determined from information on the angle of the subject F.

Next, the calculation unit 202 can calculate the X-ray energy spectrum that passes through the filter and the subject F and is absorbed by the scintillator by using the X-ray attenuation expression of the following Formula (2).

[Math. 2]

$$I = I_0 e^{-\mu x} \quad (2)$$

Here, μ is the attenuation coefficient of the subject F, the filter, the scintillator, or the like, and x is the thickness of the subject F, the filter, the scintillator, or the like. In addition, μ can be determined from information on the materials of the subject F, the filter, and the scintillator, and x can be determined from information on the thicknesses of the subject F, the filter, and the scintillator. The X-ray photon number spectrum can be obtained by dividing this X-ray energy spectrum by energy of each X-ray. The calculation unit 202 calculates the average energy of X-rays using the following Formula (3) by dividing the integral value of energy intensity by the integral value of the number of photons.

Average energy E = spectral intensity integral value / photon number integral value ⋯ (3)

The calculation unit 202 calculates the average energy of X-rays through the above calculation process. Meanwhile, for the calculation of the X-ray spectrum, a known Kramers or Birch approximation or the like may be used.

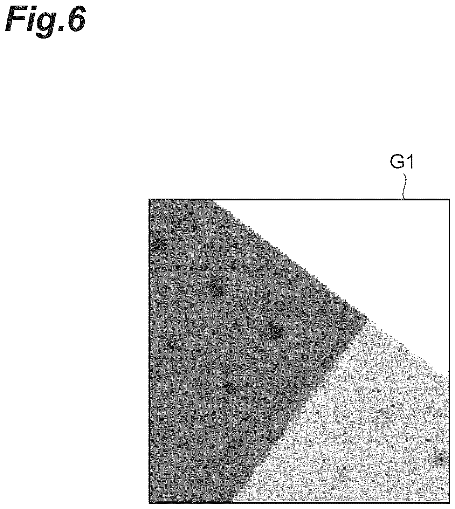

The image acquisition unit 203 acquires a radiographic image obtained by irradiating the subject F with radiation and capturing an image of the radiation passing through the subject F. Specifically, the image acquisition unit 203 generates an X-ray image on the basis of the digital signal (amplified signal) output from the X-ray detection camera 10 (more specifically, the output interface 17). The image acquisition unit 203 generates one X-ray image on the basis of a plurality of lines of digital signals output from the output interface 17. FIG. 6 is a diagram illustrating an example of an X-ray image acquired by the image acquisition unit 203.

The noise map generation unit 204 derives an evaluation value from the pixel value of each pixel in the radiographic image on the basis of relationship data indicating a relationship between the pixel value and the evaluation value obtained by evaluating the spread of the noise value, and generates a noise map that is data in which the derived evaluation value is associated with each pixel in the radiographic image. In this case, the noise map generation unit 204 derives an evaluation value from the average energy related to radiation passing through the subject F and the pixel value of each pixel in the radiographic image. Specifically, the noise map generation unit 204 uses the relational expression (relationship data) between the pixel value and the standard deviation of noise values (evaluation value obtained by evaluating the spread of the noise value) to derive the standard deviation of noise values from the average energy of X-rays calculated by the calculation unit 202 and the pixel value of each pixel in the X-ray image (radiographic image) acquired by the image acquisition unit 203. The noise map generation unit 204 generates a noise standard deviation map (noise map) by associating the derived standard deviation of noise values with each pixel in the X-ray image.

The relational expression between the pixel value and average energy used by the noise map generation unit 204 and the standard deviation of noise values is represented by the following Formula (4).

[Math. 3]

$$Noise = \sqrt{\left(FMCQ\sqrt{\frac{cf}{E_m M_E CQ}} \cdot Signal\right)^2 + \left(\sqrt{D}\right)^2 + (R)^2} \qquad (4)$$

In Formula (4), the variable Noise is the standard deviation of noise values, the variable Signal is the signal value of a pixel (pixel value), the constant F is a noise factor, the constant M is a scintillator multiplication factor, the constant C is coupling efficiency between the scan camera 12 and the scintillator layer 11 in the X-ray detection camera 10, the constant Q is the quantum efficiency of the scan camera 12, the constant cf is a conversion coefficient for converting the signal value of a pixel into an electric charge in the scan camera 12, the variable Em is the average energy of X-rays, the constant D is dark current noise generated by thermal noise in the image sensor, and the constant R is readout noise in the scan camera 12. When Formula (4) is used, the noise map generation unit 204 substitutes the pixel value of each pixel in the X-ray image acquired by the image acquisition unit 203 into the variable Signal, and substitutes the numerical value of average energy calculated by the calculation unit 202 into the variable Em. The noise map generation unit 204 obtains the variable Noise calculated using Formula (4) as the numerical value of the standard deviation of noise values. Meanwhile, other parameters including the average energy may be acquired by the input unit 201 accepting an input, or may be set in advance.

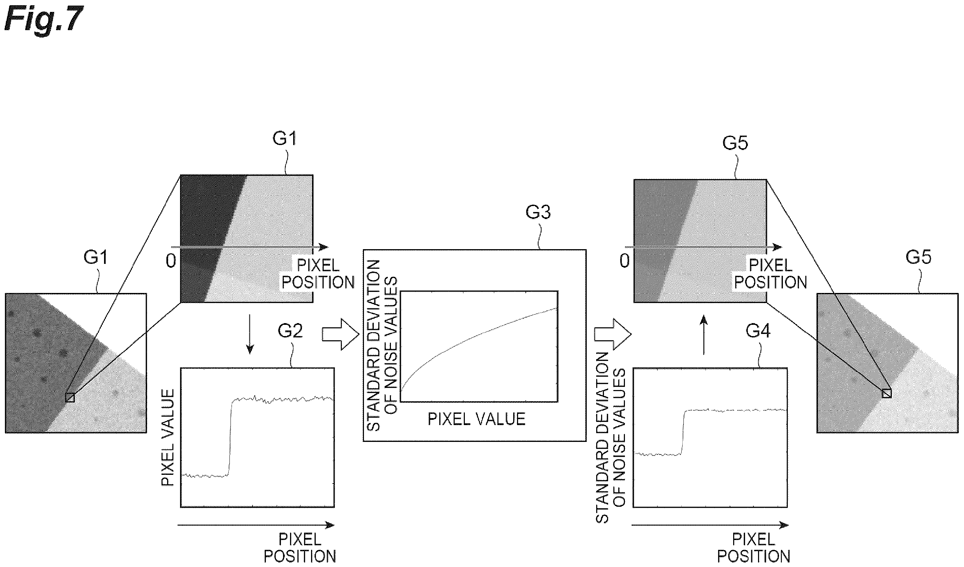

FIG. 7 is a diagram illustrating an example of generation of a noise standard deviation map which is performed by the noise map generation unit 204. The noise map generation unit 204 substitutes various pixel values into the variable Signal and acquires a correspondence relation between the pixel value and the variable Noise using the relational expression (4) between the pixel value and the standard deviation of noise values to thereby derive a relationship graph G3 indicating the correspondence relation between the pixel value and the standard deviation of noise values. The noise map generation unit 204 derives relationship data G2 indicating the correspondence relation between each pixel position and the pixel value from an X-ray image G1 acquired by the image acquisition unit 203. Further, the noise map generation unit 204 derives the standard deviation of noise values corresponding to a pixel at each pixel position in the X-ray image by applying the correspondence relation indicating the relationship graph G3 to each pixel value in the relationship data G2. As a result, the noise map generation unit 204 associates the derived standard deviation of noise with each pixel position and derives relationship data G4 indicating the correspondence relation between each pixel position and the standard deviation of noise. The noise map generation unit 204 generates a noise standard deviation map G5 on the basis of the derived relationship data G4.

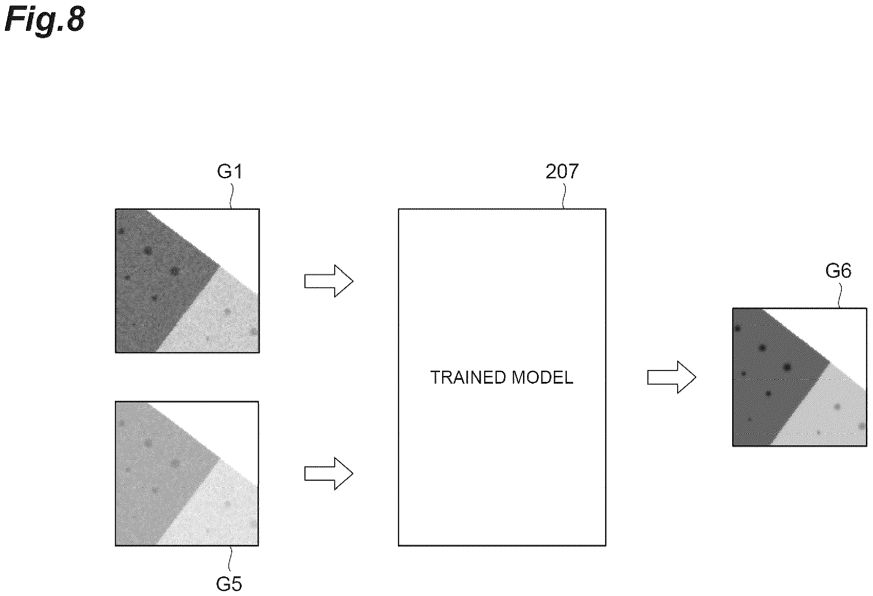

The processing unit 205 inputs the radiographic image and the noise map to the trained model 207 built in advance through machine learning and executes image processing of removing noise from the radiographic image. That is, as shown in FIG. 8, the processing unit 205 acquires the trained model 207 (which will be described later) built by the building unit 206 from a built-in memory or a storage medium in the control device 20. The processing unit 205 inputs the X-ray image G1 acquired by the image acquisition unit 203 and the noise standard deviation map G5 generated by the noise map generation unit 204 to the trained model 207. Thereby, the processing unit 205 generates an output image G6 by executing image processing of removing noise from the X-ray image G1 using the trained model 207. The processing unit 205 then outputs the generated output image G6 to the display device 30 or the like.

The building unit 206 uses a training image which is a radiographic image, a noise map generated from the training image on the basis of the relational expression between the pixel value and the standard deviation of noise values, and noise-removed image data which is data obtained by removing noise from the training image, as training data, to build the trained model 207 that outputs noise-removed image data on the basis of the training image and the noise map through machine learning. The building unit 206 stores the built trained model 207 in a built-in memory or a storage medium within the control device 20. Examples of machine learning include supervised learning, unsupervised learning, and reinforcement learning, including deep learning, neural network learning, and the like. In the first embodiment, the two-dimensional convolutional neural network described in the paper "Beyond a Gaussian Denoiser: Residual Learning of Deep CNN for Image Denoising" authored by Kai Zhang et al. is adopted as an example of a deep learning algorithm. Meanwhile, the trained model 207 may be generated by an external computer or the like and download to the control device 20 in addition to being built by the building unit 206. Meanwhile, the radiographic image used for machine learning includes a radiographic image obtained by capturing an image of a known structure or an image obtained by reproducing the radiographic image.

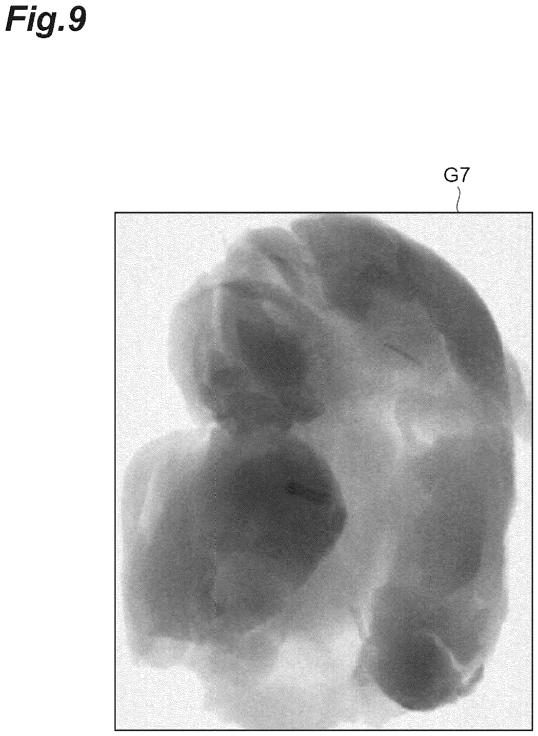

FIG. 9 is an example of a training image which is one piece of training data used to build the trained model 207. X-ray images with patterns of various thicknesses, various materials, and various resolutions as imaging targets can be used as training images. The example shown in FIG. 9 is a training image G7 generated for chicken. The training image G7 may be an X-ray image actually generated for a plurality of types of known structure using the image acquiring device 1 including the scintillator layer 11 and the scan camera 12, or may be an image generated by simulation calculation. The X-ray image may be acquired using a device different from the image acquisition device 1.

As preprocessing for performing machine learning, the building unit 206 derives an evaluation value from the pixel value of each pixel in the radiographic image on the basis of the relationship data indicating the relationship between the pixel value and the evaluation value obtained by evaluating the spread of the noise value, and generates a noise map that is data in which the derived evaluation value is associated with each pixel in the radiographic image. Specifically, when the trained model 207 is built, the building unit 206 acquires a training image generated by actual image capturing, simulation calculation, or the like from the image acquisition unit 203 or the like. The building unit 206 then sets, for example, the operating conditions of the X-ray irradiator 50 of the image acquisition device 1, the imaging conditions of the image acquisition device 1, or the like. Alternatively, the building unit 206 sets the operating conditions or imaging conditions of the X-ray irradiator 50 during simulation calculation. The building unit 206 uses the same method as the calculation unit 202 to calculate the average energy of X-rays on the basis of the above operating conditions or imaging conditions. Further, the building unit 206 uses the same method as the method used by the noise map generation unit 204 as shown in FIG. 7 to generate a noise standard deviation map on the basis of the average energy of X-rays and the training image. That is, the preprocessing method of the machine-learning method includes a noise map generation step of deriving an evaluation value from the pixel value of each pixel in the radiographic image on the basis of the relationship data indicating the relationship between the pixel value and the evaluation value obtained by evaluating the spread of the noise value and generating a noise map that is data in which the derived evaluation value is associated with each pixel in the radiographic image.

The building unit 206 builds the trained model 207 through machine learning using a training image, a noise map generated from the training image, and noise-removed image data which is data from which noise is removed in advance from the training image, as training data. Specifically, the building unit 206 acquires noise-removed image data in which noise is removed from the training image in advance. In a case where the training image is an X-ray image generated by simulation calculation, the building unit 206 uses the image before noise is added in a process of generating the training image as the noise-removed image data. On the other hand, in a case where the training image is an X-ray image actually generated for a plurality of types of known structures using the image acquisition device 1, the building unit 206 uses the noise-removed image as the noise-removed image data from the X-ray image using image processing such as an average filter, median filter, bilateral filter, or NLM filter. The building unit 206 builds the trained model 207 that outputs noise-removed image data on the basis of the training image and the noise standard deviation map by executing training based on machine learning.

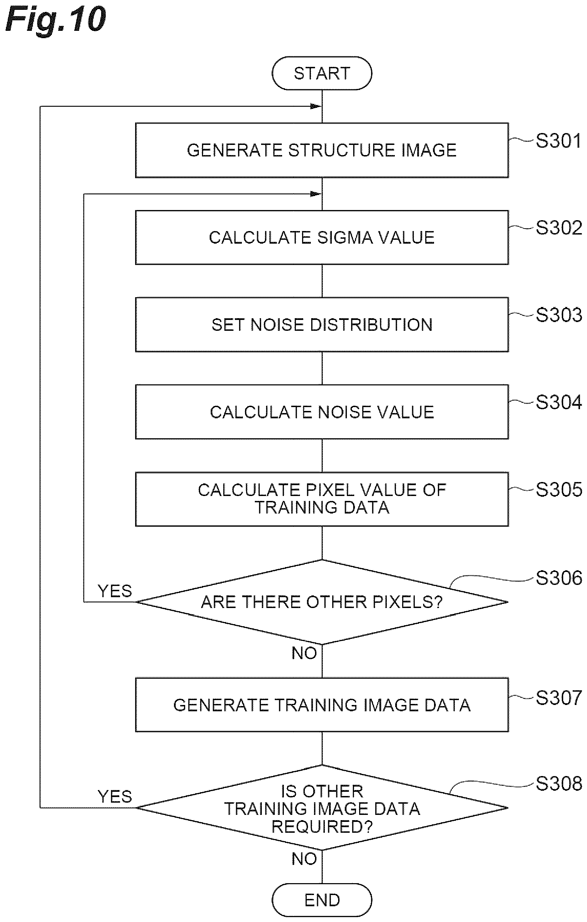

FIG. 10 is a flowchart illustrating a procedure of creating image data which is training data used to build the trained model 207 by the building unit 206.

The image data (also referred to as training image data) which is training data is created by a computer in the following procedure. First, an image of a structure having a predetermined structure (structure image) is created (step S301). For example, an image of a structure having a predetermined structure may be created by simulation calculation. In addition, a structure image may be created by acquiring an X-ray image of a structure such as a chart having a predetermined structure. Next, a sigma value which is a standard deviation of pixel values is calculated for one pixel selected from a plurality of pixels constituting this structure image (step S302). Normal distribution (Poisson distribution) indicating noise distribution is then set on the basis of the sigma value obtained in step S302 (step S303). In this way, training data with various noise conditions can be generated by setting the normal distribution on the basis of the sigma value. Subsequently, a noise value set at random is calculated along the normal distribution set on the basis of the sigma value in step S303 (step S304). Further, by adding the noise value obtained in step S304 to the pixel value of one pixel, the pixel value constituting the image data which is training data is generated (step S305). The processes from step S302 to step S305 are performed for each of a plurality of pixels constituting the structure image (step S306), and training image data serving as training data is generated (step S307). In addition, in a case where more training image data is required, it is determined that the processes from step S301 to step S307 are performed on another structure image (step S308), and another training image data serving as training data is generated. Meanwhile, another structure image may be an image of a structure having the same structure, or may be an image of a structure having another structure.

Meanwhile, it is necessary to a large amount of image data which is training data used to build the trained model 207. In addition, the structure image is preferably an image with little noise, ideally an image with no noise. Therefore, generating a structure image through simulation calculation enables a large number of noise-free images to be generated, and thus generating a structure image through simulation calculation is effective.

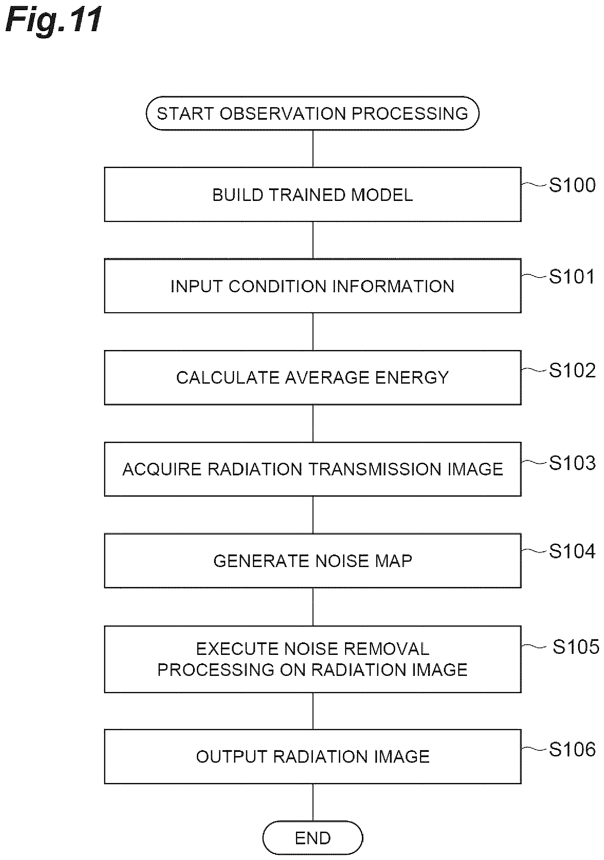

Next, a procedure of observing an X-ray transmission image of the subject F using the image acquisition device 1 according to the first embodiment, that is, a flow of the radiographic image acquisition method according to the first embodiment will be described. FIG. 11 is a flowchart illustrating a procedure of observation processing performed by the image acquisition device 1.

First, the building unit 206 uses a training image, a noise standard deviation map generated from the training image on the basis of the relational expression, and noise-removed image data, as training data to build the trained model 207 that outputs noise-removed image data on the basis of the training image and the noise standard deviation map through machine learning (step S100). Next, the input unit 201 accepts an input of condition information indicating the operating conditions of the X-ray irradiator 50, the imaging conditions of the X-ray detection camera 10, or the like from an operator (user) of the image acquisition device 1 (step S101). The calculation unit 202 calculates the value of average energy of X-rays detected by the X-ray detection camera 10 on the basis of the condition information (step S102).

Next, the subject F is set in the image acquisition device 1, an image of the subject F is captured, and an X-ray image of the subject F is acquired by the control device 20 (step S103). Further, the control device 20 derives the standard deviation of noise values from the average energy of X-rays and the pixel value of each pixel in the X-ray image on the basis of the relational expression between the pixel value and the standard deviation of noise values, and generates a noise standard deviation map by associating the derived standard deviation of noise with each pixel value (step S104).

Next, the processing unit 205 inputs the X-ray image of the subject F and the noise standard deviation map to the trained model 207 built and stored in advance, and executes noise removal processing on the X-ray image (step S105). Further, the processing unit 205 outputs an output image which is an X-ray image that has undergone noise removal processing to the display device 30 (step S106).

According to the image acquiring device 1 described above, scintillation light corresponding to the X-rays passing through the subject F is detected by the scan camera 12 in which the pixel lines 74 each having M pixels 72 arrayed in the scanning direction TD of the subject F are arrayed in N columns, the detection signals of at least two pixels 72 among the detection signals of the M pixels 72 output for each pixel line 74 undergo addition processing, and the N detection signals that have undergone the addition processing are output sequentially or simultaneously, whereby an X-ray image is output. In this case, the X-rays passing through the subject F are converted into scintillation light M $\times$ P scintillator units 11a disposed separately, and the scintillation light from the P scintillator units 11a is detected by M $\times$ N pixels 72. Additionally, by inputting the output X-ray image to the trained model 207 built in advance through machine learning using image data, noise removal processing is performed on the X-ray image. Thereby, it is possible to remove noise components while increasing signal components in the X-ray image, and to effectively improve the S/N ratio in the X-ray image. Further, by using the scintillator unit 11a separated corresponding to the pixel 72, it is possible to increase the resolution of the X-ray image. Generally, by forming the separation unit 11b that shields or reflects the scintillation light, it is possible to prevent the scintillation light from entering the adjacent scintillator unit, and to prevent a decrease in resolution. However, since the portion where the separation unit 11b is present does not contribute to the conversion of incident X-rays into scintillation light, there has also been a problem that the detection signal becomes smaller (decreases) depending on the size (area) of the separation unit 11b. A decrease in the detection signal means a decrease in the S/N ratio. Therefore, it has been difficult to achieve both an improvement in resolution and an improvement in S/N ratio using a scintillator having the separation unit 11b. On the other hand, according to the image acquiring device 1, it is possible to effectively improve the S/N ratio while increasing the resolution in the X-ray image. Specifically, in the case of the present embodiment in which an X-ray image is acquired using the scintillator layer 11 and noise removal processing is performed using the trained model 207, it can be understood that the contrast to noise ratio (CNR) is improved approximately 20 times more than in a case where an X-ray image is acquired using a scintillator that integrally covers the entire scan camera 12 and noise removal processing is not performed, and that a pseudo signal is sufficiently removed in a binarized image generated by performing threshold processing. Thereby, according to the present embodiment, in the application of foreign substance inspection, it is possible to prevent foreign substances from crossing each other and being detected.

In addition, in the image acquiring device 1, the trained model 207 is built through machine learning using image data obtained by adding noise values along a normal distribution to an X-ray image of a predetermined structure as training data. This makes it easy to prepare image data which is training data used to build the trained model 207, and allows the trained model 207 to be built efficiently.

In addition, in the image acquiring device 1, the trained model 207 is built through machine learning using an X-ray image obtained using the scintillator layer 11 as training data. In an X-ray image using the scintillator layer 11 in which the scintillator unit 11a is separated into a plurality of parts, high-frequency noise tends to occur because the noise is not blurred compared with an X-ray image using an integrated scintillator. In the above case, it becomes easy to reflect the conditions during image acquisition in the image data which is training data used to build the trained model 207, and it is possible to build the trained model 207 that realizes appropriate noise removal corresponding to the tendency for high-frequency noise to occur.

In addition, according to the image acquisition device 1 described above, the standard deviation of noise values is derived from the pixel value of each image of the X-ray image using the relational expression between the pixel value and the standard deviation of noise values, and a noise standard deviation map that is data in which the derived standard deviation of noise values is associated with each pixel in the X-ray image is generated. The X-ray image and the noise standard deviation map are then input to the trained model 207 built in advance through machine learning, and image processing of removing noise from the X-ray image is executed. With such a configuration, noise in each pixel in the X-ray image is removed through machine learning in consideration of the standard deviation of noise values derived from the pixel value of each pixel in the X-ray image. This makes it possible to realize noise removal corresponding to the relationship between the pixel value and the standard deviation of noise values in the X-ray image using the trained model 207. As a result, it is possible to effectively remove noise in the X-ray image.

Particularly, in the X-ray image, the mode of noise changes depending on differences in a tube voltage, a filter, a scintillator, conditions of an X-ray detection camera (a gain setting value, a circuit noise value, an amount of saturated charge, a conversion coefficient value (e-/count), and the line rate of the camera), a subject, and the like. For this reason, in a case where noise removal is attempted to be realized through machine learning, preparation of a learning model trained under various conditions can be considered. That is, as a comparative example, a method of building a plurality of learning models in accordance with the conditions during the measurement of the X-ray image, selecting a learning model for each condition, and executing noise removal processing can also be adopted. In the case of such a comparative example, a learning model must be built for each noise condition such as, for example, the average energy of X-rays, the gain of the X-ray detection camera, and the type of X-ray camera, and a huge number of learning models are required to be generated, which may take a long time to perform building. As an example, when there are ten average energies of X-rays, eight gains of the X-ray detection camera, and three types of products, 240 trained models are required, but in a case where it takes one day per model to build a trained model, it will take 240 days for machine learning. In this regard, according to the present embodiment, by generating a noise map from the X-ray image and using the noise map as input data for machine learning, it is possible to reduce the noise conditions that require the generation of a trained model, and the learning time to build the trained model 207 is greatly reduced.

[Modification example of control device 20 of first embodiment]

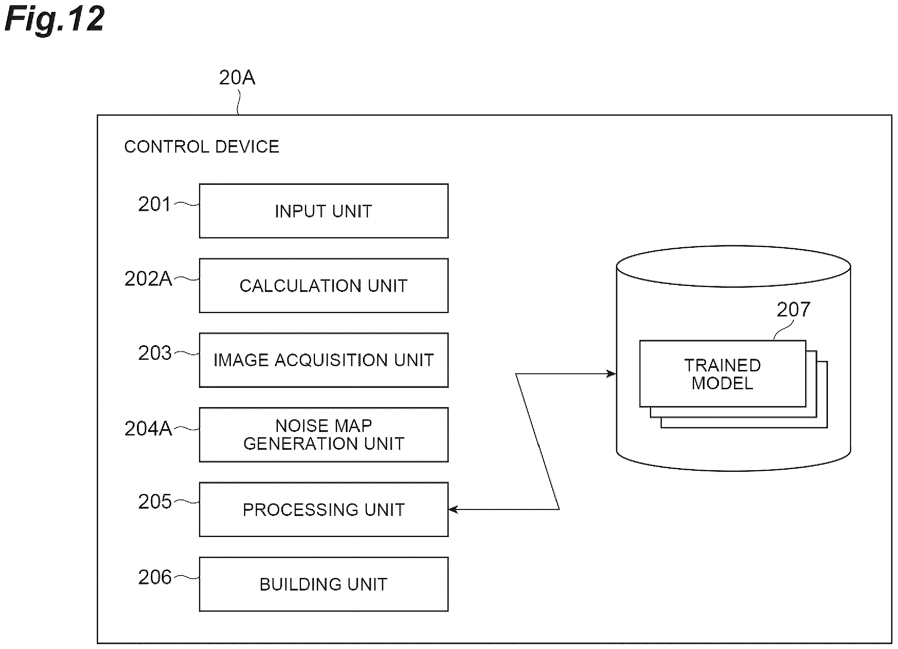

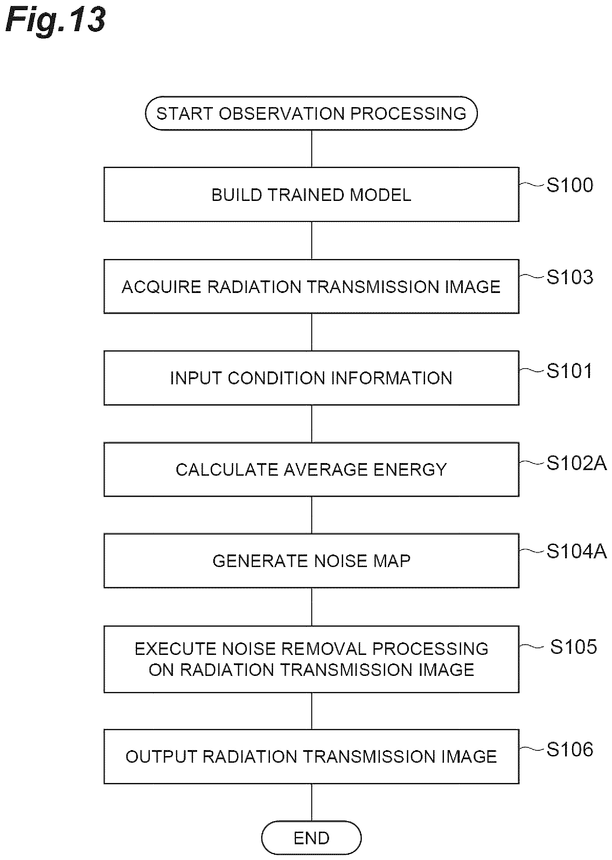

FIG. 12 is a block diagram illustrating a functional configuration of a control device 20A in a modification example of the first embodiment. The control device 20A is different from the above-described first embodiment in that a calculation unit 202A has a function of deriving the average energy of X-rays from the pixel value of the X-ray image, and that a noise map generation unit 204A has a function of deriving a noise standard deviation map on the basis of the pixel value of the X-ray image and the average energy of X-rays derived from the X-ray image. FIG. 13 is a flowchart illustrating a procedure of observation processing performed by the image acquisition device 1 including the control device 20A in FIG. 12. As shown in FIG. 13, in the control device 20A, the process shown in step S103 of the control device 20 according to the first embodiment shown in FIG. 11 is performed immediately after step S100. In the control device 20A, the processes shown in S102A and S104A are executed in place of the processes of steps S 102 and S 104 of the control device 20.

The calculation unit 202A calculates the average energy from the pixel value of each pixel in the radiographic image (step S102A). Specifically, the calculation unit 202A derives in advance the relationship between the pixel value and the average energy for each piece of condition information through simulation calculation of the X-ray spectrum or the like. The calculation unit 202A acquires condition information including at least the tube voltage acquired by the input unit 201 and information on a scintillator included in the X-ray detection camera 10. The calculation unit 202A then selects a relationship corresponding to the condition information from the previously derived relationship between the pixel value and the average energy on the basis of the condition information. Further, the calculation unit 202A derives the average energy for each pixel from the pixel value of each pixel in the X-ray image acquired by the image acquisition unit 203 on the basis of the selected relationship.

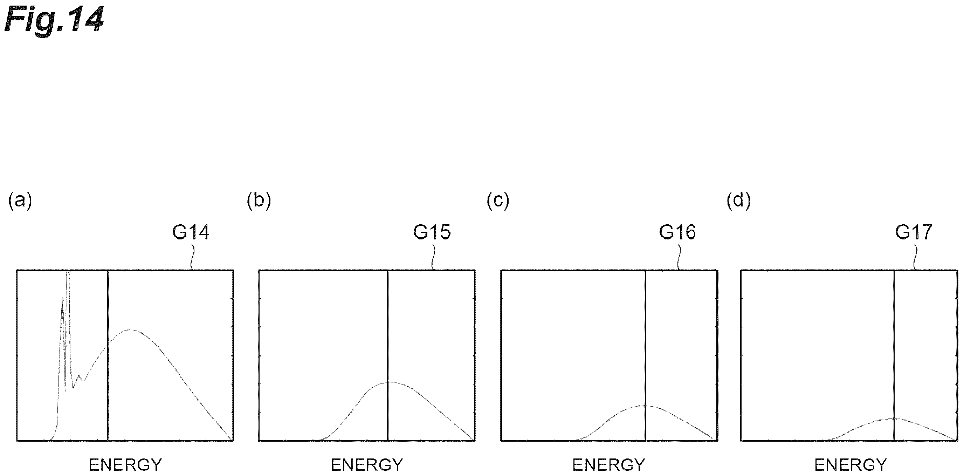

Hereinafter, the derivation of the relationship between the pixel value and the average energy for each piece of condition information which is performed by the calculation unit 202A will be described with reference to FIGS. 14 to 18.

First, the calculation unit 202A derives a graph G18 indicating a relationship between the thickness of the subject F and the transmittance of X-rays and a graph G19 indicating a relationship between the thickness of the subject F and the average energy of X-rays on the basis of the condition information. Specifically, as shown in the parts (a) to (d) of FIG. 14, the calculation unit 202A calculates energy spectra G14 to G17 of X-rays transmitted in a case where the thickness of the subject F is changed in various ways on the basis of the condition information including at least information on the tube voltage and the scintillator included in the X-ray detection camera 10 through simulation calculation. FIG. 14 is a graph illustrating an example of simulation calculation results of energy spectra of X-rays passing through the subject F in the calculation unit 202A. Here, the energy spectra G14 to G17 of transmitted X-rays are exemplified in a case where simulation calculation is performed by gradually increasing the thickness of the subject F composed of water. Further, the calculation unit 202A calculates the average energy of X-rays transmitted in a case where the thickness of the subject F is changed in various ways on the basis of the calculated energy spectra G14 to G17. Meanwhile, in addition to the simulation calculation, the calculation unit 202A may obtain the relationship between the thickness of the subject F and the average energy on the basis of the X-ray image obtained by capturing an image of a structure of which the thickness is known.

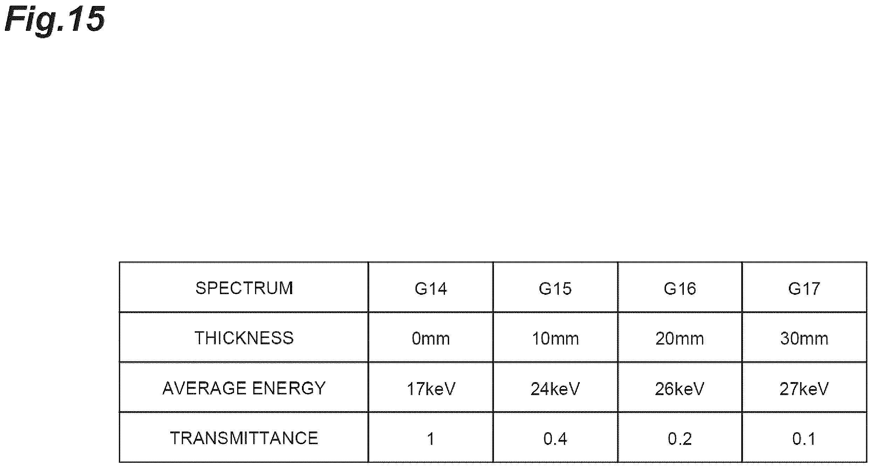

Further, the calculation unit 202A also derives a relationship between the thickness of the subject F and the transmittance of X-rays on the basis of the above simulation results. FIG. 15 is a table illustrating an example of a relationship between the thickness of the subject F and the average energy and transmittance derived by the calculation unit 202A. As shown in FIG. 15, the average energy of transmitted X-rays and the transmittance of X-rays are derived corresponding to each of the energy spectra G14 to G17 calculated for each thickness of the subject F.

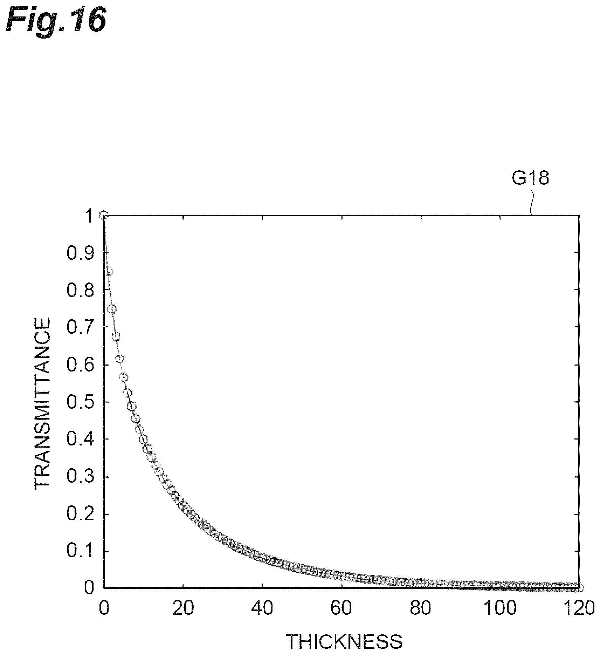

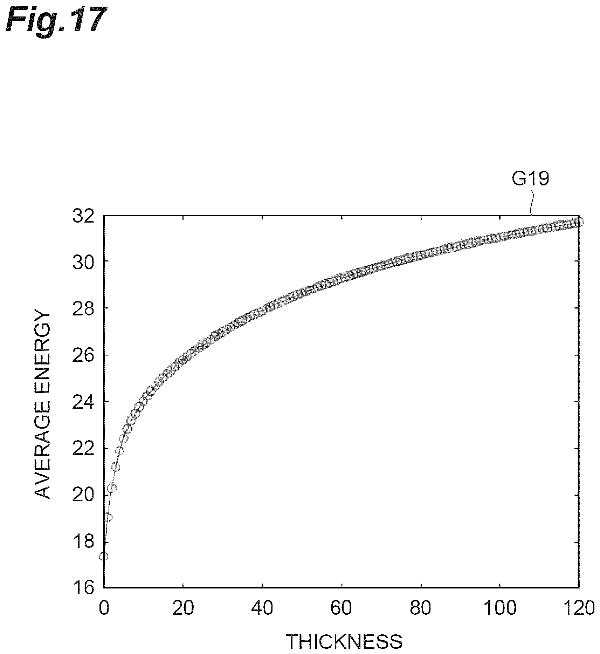

Subsequently, the calculation unit 202A derives the graph G18 indicating the relationship between the thickness of the subject F and the transmittance of X-rays from the transmittance of X-rays derived for the subject F having various thicknesses. FIG. 16 is a graph illustrating a relationship between the thickness of the subject F and the transmittance of X-rays with respect to the subject F derived by the calculation unit 202A. Additionally, the calculation unit 202A derives the graph G19 indicating a relationship between the thickness of the subject F and the average energy of X-rays from the average energy of X-rays derived for the subject F having various thicknesses. FIG. 17 is a graph illustrating a relationship between the thickness of the subject F and the average energy of X-rays passing through the subject F derived by the calculation unit 202A.

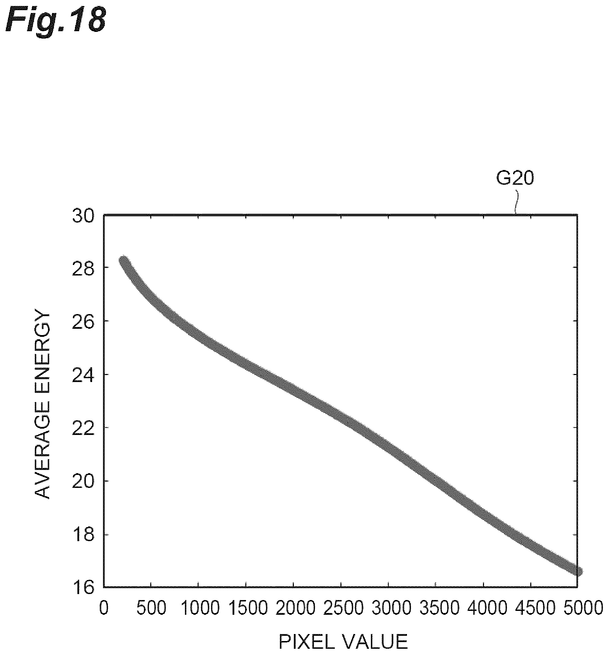

The calculation unit 202A then derives a graph G20 indicating a relationship between the pixel value of the X-ray image and the average energy as shown in FIG. 18 for each of various types of condition information on the basis of the two graphs G18 and G19 derived for each of various types of condition information. FIG. 18 is a graph illustrating a relationship between the pixel value of the X-ray image and the average energy derived by the calculation unit 202A. Specifically, the calculation unit 202A derives the pixel value $I_0$ of the X-ray transmission image in a case where there is no subject F on the basis of the condition information. The calculation unit 202A then sets the pixel value I of the X-ray image in a case where there is the subject F, and calculates $I/I_0$ which is the transmittance of X-rays. Further, the calculation unit 202A derives the thickness of the subject F from $I/I_0$ which is the calculated transmittance of X-rays on the basis of the graph G18 of the thickness of the subject F and the transmittance of X-rays with respect to the subject F. Finally, the calculation unit 202A derives the average energy of transmitted X-rays corresponding to the thickness of the subject on the basis of the derived thickness of the subject F and the graph G19 of the thickness of the subject F and the average energy of transmitted X-rays. Subsequently, by performing the above derivation for each of various types of condition information while the pixel value I of the X-ray image is changed in various ways, the calculation unit 202A derives the graph G20 indicating the relationship between the pixel value of the X-ray image and the average energy of transmitted X-rays for each piece of condition information.

Here, an example of derivation of average energy based on the pixel value performed by the calculation unit 202A will be described. For example, it is assumed that the calculation unit 202A derives the pixel value of the X-ray transmission image in a case where there is no subject F as $I_0$ = 5000 on the basis of the condition information, and sets the pixel value of the X-ray image in a case where there is the subject F to be I = 500. In this case, the calculation unit 202A calculates the transmittance of X-rays to be $I/I_0$ = 0.1. Subsequently, the calculation unit 202A derives that the thickness corresponding to the transmittance of X-rays of 0.1 is 30 mm on the basis of the graph G18 indicating the relationship between the thickness of the subject F and the transmittance of X-rays with respect to the subject F. Further, the calculation unit 202A derives that the average energy corresponding to the pixel value of 500 is 27 keV on the basis of the graph G19 indicating the relationship between the thickness of the subject F and the average energy of transmitted X-rays. Finally, the calculation unit 202A repeats the derivation of the average energy of X-rays for each pixel value, and derives the graph G20 indicating the relationship between the pixel value of the X-ray image and the average energy.

Further, the calculation unit 202A selects the graph G20 corresponding to the condition information acquired by the input unit 201 from a plurality of graph G20 derived in advance in the above procedure. The calculation unit 202A derives the average energy of transmitted X-rays corresponding to the pixel value of each pixel in the X-ray image acquired by the image acquisition unit 203 on the basis of the selected graph G20.

Meanwhile, instead of deriving the relationship between the pixel value and the average energy of X-rays for each piece of condition information in advance, the calculation unit 202A may derive the average energy of X-rays from the condition information acquired by the input unit 201 and the pixel value of each pixel in the X-ray image with reference to the graphs G18 and G19. Specifically, the calculation unit 202A derives the pixel value $I_0$ of the X-ray image in a case where there is no subject on the basis of the condition information. The calculation unit 202A then calculates the transmittance by obtaining the ratio of the pixel value I of each pixel in the X-ray image acquired by the image acquisition unit 203 to the pixel value $I_0$. Further, the calculation unit 202A derives the thickness on the basis of the calculated transmittance and the graph G18 indicating the relationship between the thickness and the transmittance of X-rays. The calculation unit 202A then derives the average energy for each pixel value of each pixel in the X-ray image by deriving the average energy on the basis of the derived thickness and the graph G19 indicating the relationship between the thickness and the average energy.

The noise map generation unit 204A generates a noise standard deviation map from the X-ray image acquired by the image acquisition unit 203 and the average energy of X-rays corresponding to each pixel of the X-ray image derived by the calculation unit 202A (step S104A). Specifically, the noise map generation unit 204A derives the standard deviation of noise values for each pixel considering the thickness of the subject by substituting the pixel value of each pixel in the X-ray image acquired by the image acquisition unit 203 and the average energy derived for each pixel by the calculation unit 202A into the relational expression (4). The noise map generation unit 204A generates the standard deviation of noise values corresponding to each pixel in the X-ray image as a noise standard deviation map.

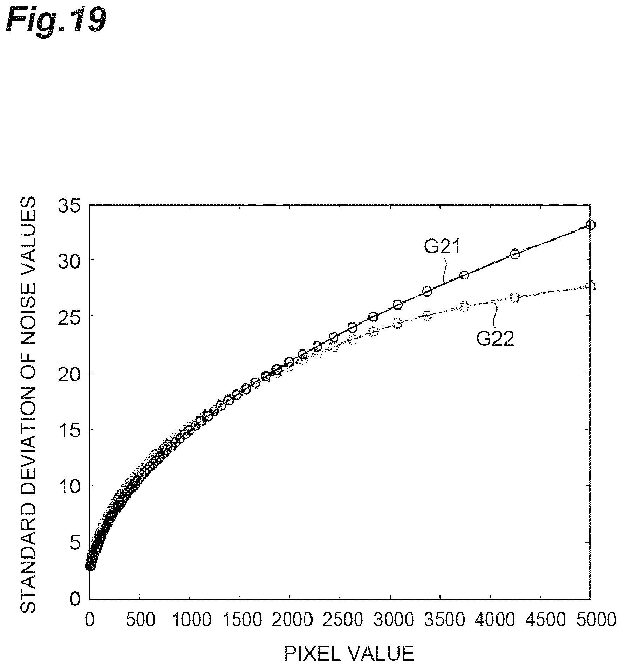

FIG. 19 is a graph indicating an example of a relationship between the pixel value and the standard deviation of noise values. This graph shows the relationship between the pixel value of the X-ray image and the standard deviation of noise values derived from the pixel value of the X-ray image by the calculation unit 202A and the noise map generation unit 204A according to the present modification example. In the present modification example, since the standard deviation of noise values is derived in consideration of the thickness of the subject, the thickness of the subject decreases as the pixel value increases, and the average energy in a pixel decreases. Therefore, as can be estimated from the relational expression (4), the first embodiment and the present modification example differ in a change in the standard deviation of noise values when the pixel value increases. In the example shown in FIG. 19, a graph G22 of the present modification example has a smaller degree of increase in the standard deviation of noise values when the pixel value increases than a graph G21 of the first embodiment.

In the control device 20A of the modification example of the first embodiment, the average energy is calculated from the pixel value of each pixel in the X-ray image. Here, for example, in a case where there are a plurality of subjects having different thicknesses or materials in the X-ray image, the average energy differs greatly for each subject, and noise cannot be sufficiently removed from the X-ray image. With such a configuration, since the average energy of X-rays passing through the subject F is calculated for each pixel value of each pixel in the X-ray image, noise removal corresponding to the relationship between the pixel value of each pixel in the X-ray image and the noise can be realized, for example, in consideration of differences in thickness, material, and the like. As a result, it is possible to effectively remove noise in the X-ray image.

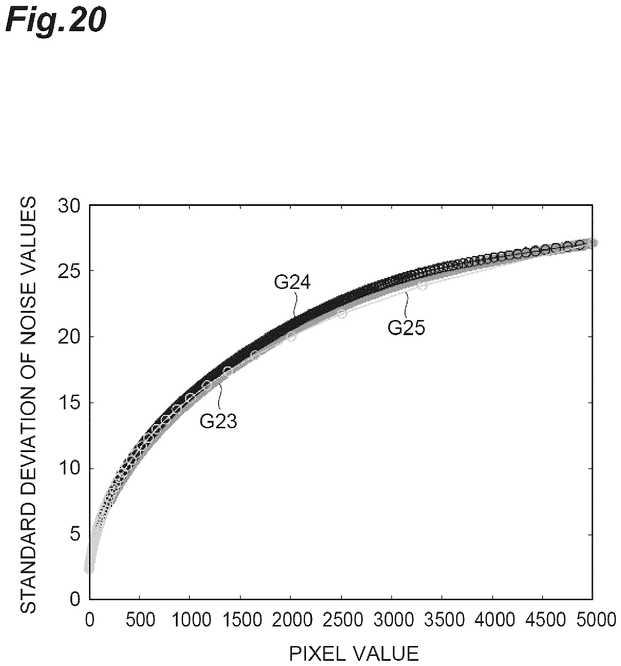

Meanwhile, the control device 20A according to the present modification example derives the average energy from the pixel value of the X-ray image using the graph G20 derived for each of various types of condition information. In this case, the average energy may be derived from the pixel value while ignoring the difference in the material of the subject F. FIG. 20 is a graph illustrating a relationship between the pixel value of the X-ray image and the standard deviation of noise values derived by the calculation unit 202A. Here, changes in the material of the subject F are also taken into consideration as the condition information to derive the relationship. A graph G24 shows a derivation example in a case where the material is aluminum, a graph G23 shows a derivation example in a case where the material is polyethylene terephthalate (PET), and a graph G25 shows a derivation example in a case where the material is copper. In this way, if the tube voltage of the X-ray irradiator 50 and information on a scintillator included in the X-ray detection camera 10 used to capture an image of the subject F are the same even in a case where the material of the subject F changes, the relationship between the pixel value and the average energy of transmitted X-rays does not change significantly, and thus the relationship between the pixel value and the standard deviation of noise values also does not change significantly. In consideration of such properties, the control device 20A can derive the average energy from the pixel value of the X-ray image while ignoring the difference in the material of the subject F as the condition information. Even in such a case, according to the control device 20A of the present modification example, it is possible to realize noise removal corresponding to the relationship between the pixel value and the standard deviation of noise. As a result, it is possible to more effectively remove noise in the X-ray image.

[Another modification example of control device 20 of first embodiment]

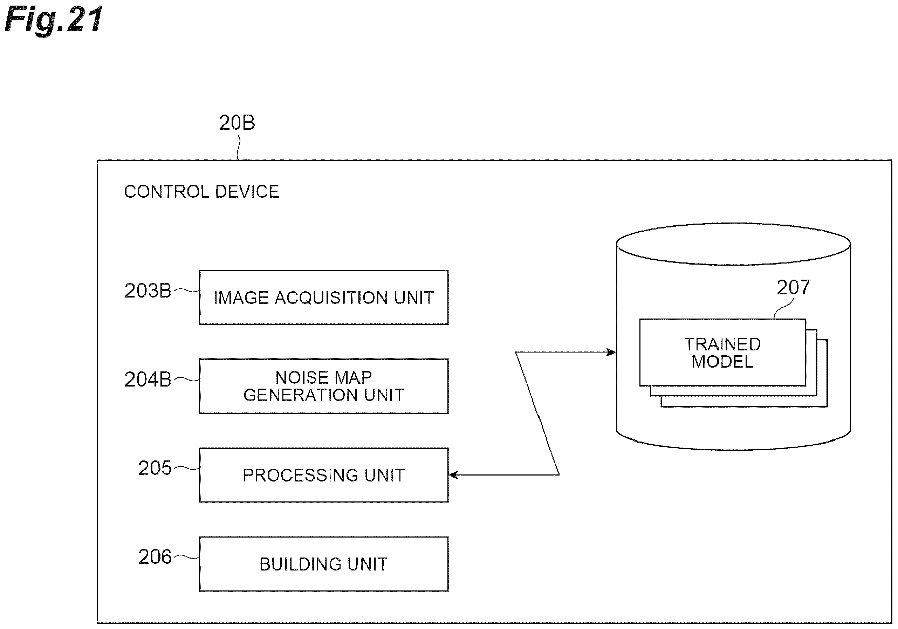

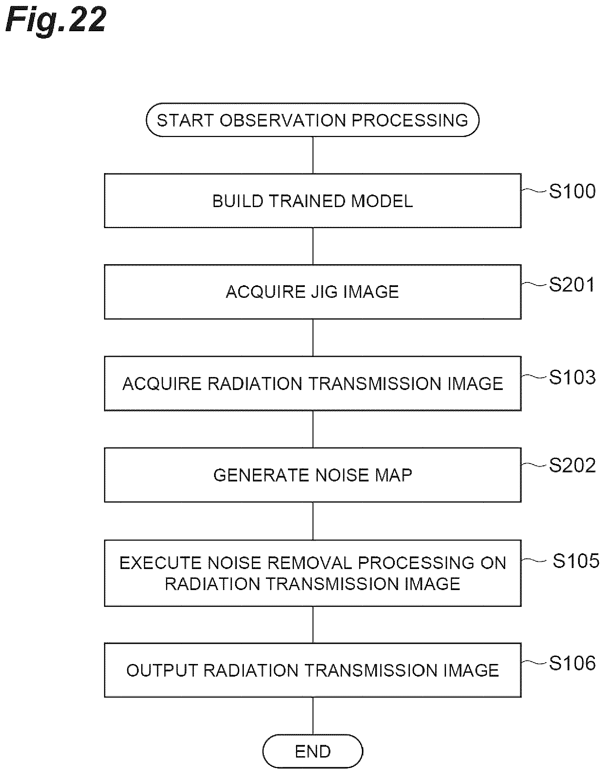

FIG. 21 is a block diagram illustrating a functional configuration of a control device 20B according to another modification example of the first embodiment. The control device 20B is different from the above-described first embodiment in that the image acquisition unit 203B has a function of acquiring an X-ray image of a jig, and that the noise map generation unit 204B has a function of deriving a graph indicating the relationship between the pixel value and the standard deviation of noise values from the X-ray image of the jig. FIG. 22 is a flowchart illustrating a procedure of observation processing performed by the image acquisition device 1 including the control device 20B of FIG. 21. As shown in FIG. 22, in the control device 20B according to the present modification example, the processes shown in steps S201 and S202 are executed in place of the processes of steps S101, S102, and S104 performed by the control device 20 according to the first embodiment shown in FIG. 11.

The image acquisition unit 203B acquires a radiographic image of the jig obtained by irradiating the jig with radiation and capturing an image of the radiation passing through the jig (step S201). Specifically, the image acquisition unit 203B acquires an X-ray image captured by irradiating the jig and the subject F with X-rays using the image acquisition device 1. As the jig, a flat plate-like member or the like of which the thickness and material are known is used. That is, the image acquisition unit 203B acquires an X-ray image of the jig captured using the image acquisition device 1 in advance of the observation process for the subject F. The image acquisition unit 203B then acquires an X-ray image of the subject F captured using the image acquisition device 1. However, the acquisition timings of the X-ray images of the jig and the subject F are not limited to the above, and may be simultaneous or opposite (step S103). In addition, the image acquisition unit 203B acquires an X-ray image obtained by irradiating the subject F with X-rays and capturing an image of the X-rays passing through the subject F in the same way as the image acquisition unit 203.

The image acquisition device 1 sets a jig and captures an image of the jig, and the noise map generation unit 204B derives relationship data indicating the relationship between the pixel value and an evaluation value obtained by evaluating the spread of noise values from the radiographic image of the jig obtained as a result (step S202). Specifically, the noise map generation unit 204B derives a noise standard deviation map indicating the relationship between the pixel value and the standard deviation of noise values from the X-ray image of the jig.

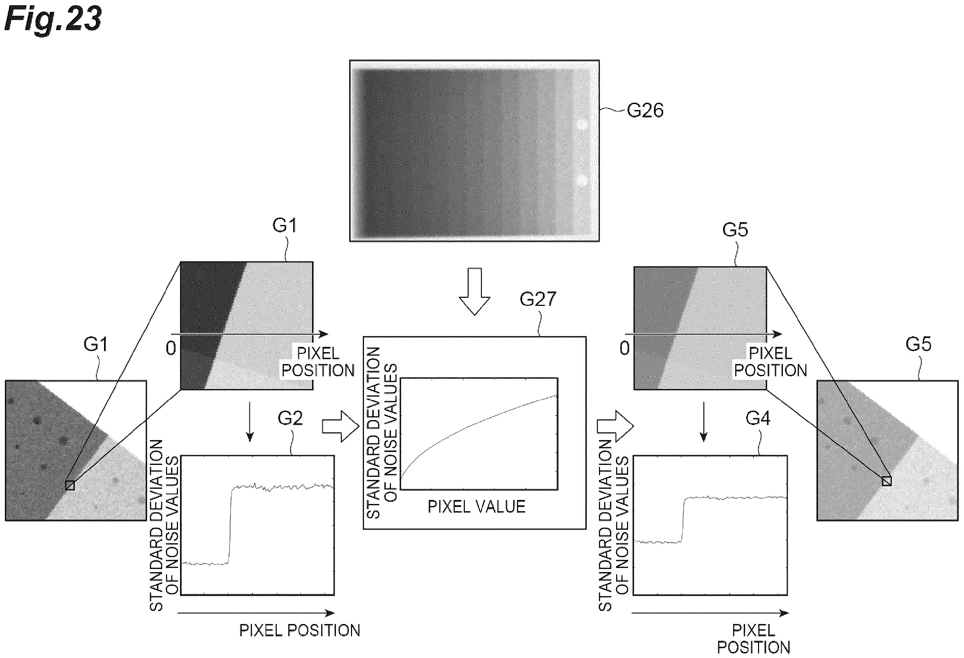

FIG. 23 is a diagram illustrating an example of generation of a noise standard deviation map which is performed by the noise map generation unit 204B. The noise map generation unit 204B derives a relationship graph G27 indicating the correspondence relation between the pixel value and the standard deviation of noise values from an X-ray image G26 of the jig. In the same way as in the first embodiment, the noise map generation unit 204B then derives the relationship data G2 indicating the correspondence relation between each pixel position and pixel value from the X-ray image G1 acquired by the image acquisition unit 203B. Further, the noise map generation unit 204 derives the standard deviation of noise values corresponding to a pixel at each pixel position in the X-ray image by applying the correspondence relation indicated by the relationship graph G27 to each pixel in the relationship data G2. As a result, the noise map generation unit 204 associates the derived standard deviation of noise with each pixel position, and derives a relationship data G4 indicating the correspondence relation between each pixel position and the standard deviation of noise. The noise map generation unit 204 then generates a noise standard deviation map G5 on the basis of the derived relationship data G4.

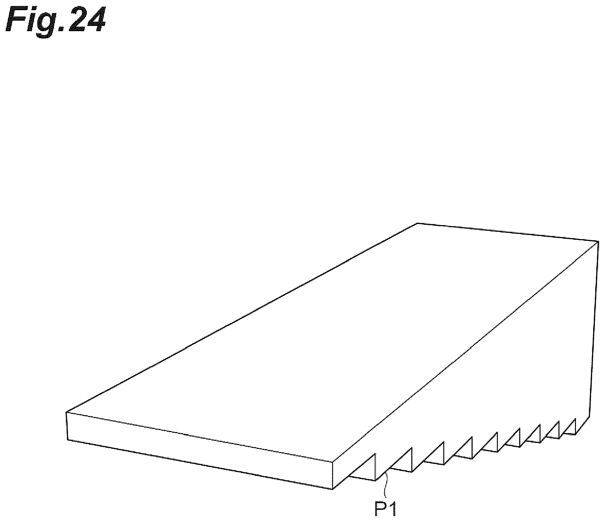

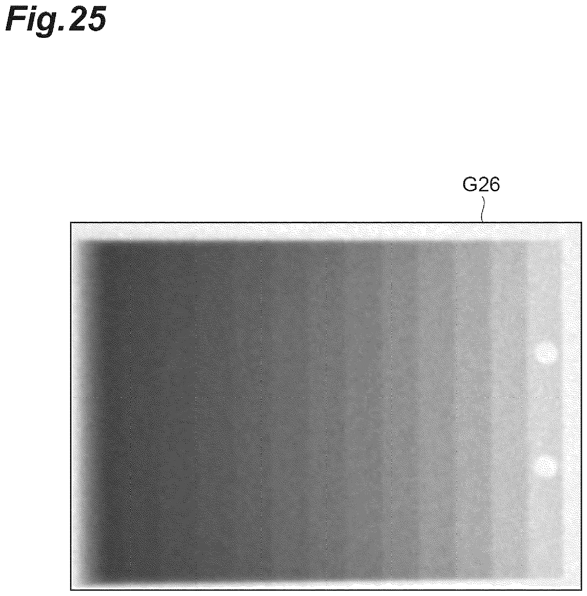

The derivation of the relationship graph G27 indicating the relationship between the pixel value and the standard deviation of noise values from the X-ray image G26 of the jig which is performed by the noise map generation unit 204B will be described. FIG. 24 shows an example of the structure of a jig used for image capturing in the present modification example. For the jig, for example, a member P1 of which the thickness changes stepwise in one direction can be used. FIG. 25 shows an example of an X-ray image of the jig in FIG. 24. First, in the X-ray image G26 of the jig, the noise map generation unit 204B derives a pixel value in a case where there is no noise for each step of the jig (hereinafter referred to as a true pixel value), and derives the standard deviation of noise values on the basis of the true pixel value. Specifically, the noise map generation unit 204B derives the average value of the pixel values at a certain step of the jig. The noise map generation unit 204B then uses the derived average value of the pixel values as the true pixel value at that step. In that step, the noise map generation unit 204B derives the difference between each pixel value and the true pixel value as a noise value. The noise map generation unit 204B derives the standard deviation of the noise values from the derived noise value for each pixel value.

The noise map generation unit 204B then derives a relationship between the true pixel value and the standard deviation of noise values as the relationship graph G27 between the pixel value and the standard deviation of noise values. Specifically, the noise map generation unit 204B derives the true pixel value and the standard deviation of noise values for each step of the jig. The noise map generation unit 204B plots the derived relationship between the true pixel value and the standard deviation of noise values on a graph and draws an approximation curve to derive the relationship graph G27 indicating the relationship between the pixel value and the standard deviation of noise values. Meanwhile, for the approximation curve, exponential approximation, linear approximation, log approximation, polynomial approximation, power approximation, or the like is used.

In the control device 20B of the present modification example, relationship data is generated on the basis of a radiographic image obtained by capturing an image of an actual jig. This makes it possible to obtain optimum relationship data for noise removal from the radiographic image of the subject F. As a result, it is possible to more effectively remove noise in the radiographic image.

Meanwhile, the noise map generation unit 204B may derive the relationship between the pixel value and the standard deviation of noise values from the captured image in a case where the tube current or the exposure time is change in the absence of a subject without using the jig. With such a configuration, since the relationship data is generated on the basis of the radiographic image obtained by actual image capturing and the noise map is generated, it is possible to realize noise removal corresponding to the relationship between the pixel value and the spread of noise. As a result, it is possible to more effectively remove noise in the radiographic image.

Specifically, the image acquisition unit 203B may acquire a plurality of radiographic images captured without a subject (step S201), and the noise map generation unit 204B may derive the relationship between the pixel value and the standard deviation of noise values from the radiographic image acquired by the image acquisition unit 203B (step S202). The plurality of radiographic images are a plurality of images that differ from each other in at least one of the conditions of the radiation source and the imaging conditions. As an example, the image acquisition unit 203B acquires a plurality of X-ray images captured using the image acquisition device 1 without the subject F in advance of the observation process for the subject F while the tube current or the exposure time is changed. The noise map generation unit 204B then derives the true pixel value for each X-ray image, and derives the standard deviation of noise on the basis of the true pixel value in the same way as in the present modification example. Further, in the same way as in the present modification example, the noise map generation unit 204B plots the relationship between the true pixel value and the standard deviation of noise on a graph and draws an approximation curve to derive a relationship graph indicating the relationship between the pixel value and the standard deviation of noise values. Finally, in the same way as in the first embodiment, the noise map generation unit 204B generates a noise standard deviation map from the X-ray image acquired by the image acquisition unit 203B on the basis of the derived relationship graph.

[Second embodiment]

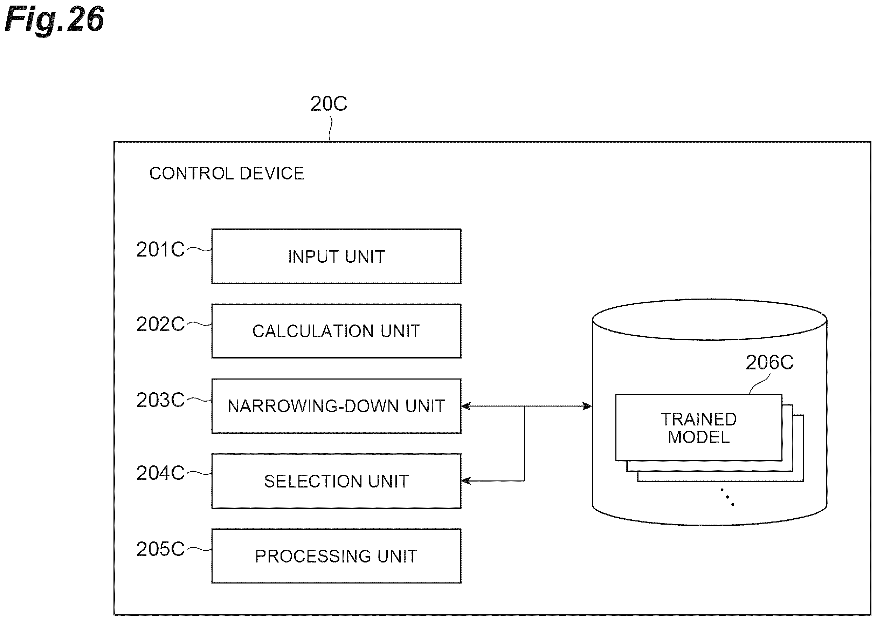

FIG. 26 is a block diagram illustrating a functional configuration of a control device 20C according to a second embodiment. The control device 20C includes an input unit 201C, a calculation unit 202C, a narrowing-down unit 203C, a selection unit 204C, and a processing unit 205C.

In addition, the control device 20C stores in advance a plurality of trained models 206C that execute noise removal processing on an X-ray transmission image. Each of the plurality of trained models 206C is a learning model based on machine learning which is built in advance using image data as training data. Examples of machine learning include supervised learning, deep learning, reinforcement learning, neural network learning, and the like. In the present embodiment, the two-dimensional convolutional neural network described in the paper "Beyond a Gaussian Denoiser: Residual Learning of Deep CNN for Image Denoising" authored by Kai Zhang et al. is adopted as an example of a deep learning algorithm. The plurality of trained models 206C may be generated by an external computer or the like and downloaded to the control device 20C, or may be generated within the control device 20C.

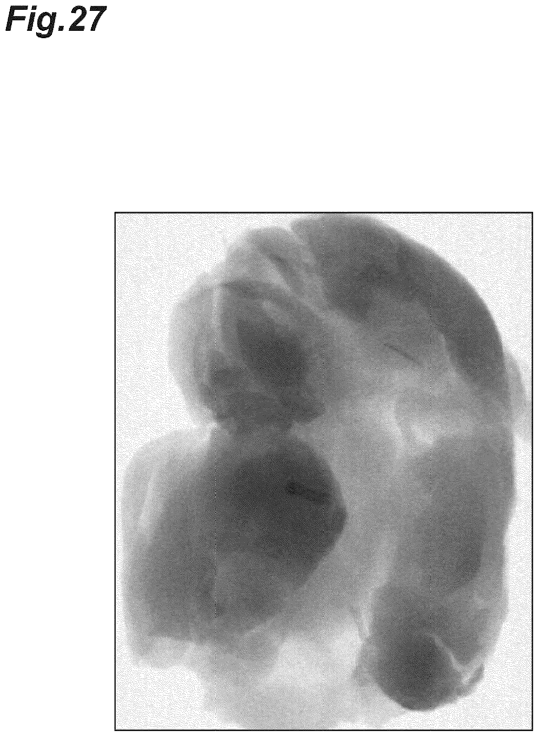

FIG. 27 shows an example of image data which is training data used to build the trained model 206C. As the training data, X-ray transmission images with patterns of various thicknesses, various materials, and various resolutions as imaging targets can be used. The example shown in FIG. 27 is an example of an X-ray transmission image generated for chicken. This image data may be an X-ray transmission image actually generated for a plurality of types of subjects using the image acquiring device 1, or may be image data generated by simulation calculation. The X-ray transmission image may be acquired using a device different from the image acquiring device 1. In addition, the X-ray transmission image and the image data generated by simulation calculation may be combined. Each of the plurality of trained models 206C is built in advance using image data obtained for transmitted X-rays with different average energy, that is, image data of which the noise distribution is known. The average energy of X-rays in the image data is set to different values in advance by setting the operating conditions of the X-ray irradiator (radiation source) 50 of the image acquiring device 1, the imaging conditions of the image acquiring device 1, or the like, or by setting the operating conditions of the X-ray irradiator 50 or the imaging conditions during simulation calculation (a method of setting the average energy based on operating conditions or imaging conditions will be described later). That is, the plurality of trained models 206C are built through machine learning using, as training data, an training image which is an X-ray image corresponding to the average energy related to X-rays passing through the subject F calculated on the basis of condition information indicating the operating conditions of the X-ray irradiator (radiation source) 50 when the X-ray transmission image of the subject F is captured, the imaging conditions of the X-ray detection camera 10, or the like (building step). For example, in the present embodiment, the plurality of trained models 206C are built using a plurality of frames (for example, 20,000 frames) of a plurality of types of image data each having an average energy of 10 keV, 20 keV, 30 keV, ⋯ in 10 keV increments.

The image data which is training data used to build the trained model 206C is generated by a creation procedure similar to the creation procedure in the above-described first embodiment.

Hereinafter, referring to FIG. 26, the details of the functions of each functional unit of the control device 20C will be described.

The input unit 201C accepts an input condition information indicating the operating conditions of the X-ray irradiator (radiation source) 50 when the X-ray transmission image of the subject F is captured, the imaging conditions of the X-ray detection camera 10, or the like from a user of the image acquiring device 1. Examples of the operating conditions include all or some of a tube voltage, a target angle, a target material, and the like. Examples of the condition information indicating the imaging conditions include all or some of the material and thickness of the filters 51 and 19 (filters included in the camera used to capture an image of a subject or filters included in the source) disposed between the X-ray irradiator 50 and the X-ray detection camera 10, the distance (FDD) between the X-ray irradiator 50 and the X-ray detection camera 10, the type of window material of the X-ray detection camera 10, and all or some of information relating to the material and thickness of the scintillator layer 11 of the X-ray detection camera 10, X-ray detection camera information (for example, a gain setting value, a circuit noise value, an amount of saturated charge, a conversion coefficient value (e-/count), and the line rate (Hz) or line speed (m/min) of the camera), information on the subject, and the like. The input unit 201C may accept an input of the condition information as a direct input of information such as numerical values, or may accept the input as a selective input for information such as numerical values which are set in an internal memory in advance. The input unit 201C accepts the input of the above condition information from a user, but it may acquire some condition information (such as a tube voltage) in accordance with the detection result of the state of control performed by the control device 20C.

The calculation unit 202C calculates the value of the average energy of X-rays (radiation) passing through the subject F and detected by the X-ray detection camera 10 using the image acquiring device 1 on the basis of the condition information accepted by the input unit 201C. For example, the calculation unit 202C calculates an X-ray spectrum detected by the X-ray detection camera 10 using, for example, a known Tucker approximation or the like on the basis of information such as a tube voltage, a target angle, a target material, the material and thickness of the filter and their presence or absence, the type of window material and its presence or absence, and the material and thickness of the scintillator layer 11 of the X-ray detection camera 10 which are included in the condition information. The calculation unit 202C further calculates a spectral intensity integral value and a photon number integral value from the spectrum of the X-rays, and calculates the value of the average energy of the X-rays by dividing the spectral intensity integral value by the photon number integral value.

A calculation method using a known Tucker approximation will be described. For example, in a case where the target is specified as tungsten and the target angle is specified as 25°, the calculation unit 202C can determine Em: kinetic energy during electron target collision, T: electron kinetic energy in the target, A: proportionality constant determined by the atomic number of the target substance, $\rho$: the density of the target, $\mu(E)$: the linear attenuation coefficient of the target substance, B: the function of Z and T that changes gently, C: the Thomson-Whiddington constant, $\theta$: the target angle, and c: the speed of light in vacuum. Further, the calculation unit 202C can calculate an irradiation X-ray spectrum by calculating the following Formula (1) on the basis of these values.

Next, the calculation unit 202C can calculate the X-ray energy spectrum that passes through the filter and the subject F and is absorbed by the scintillator by using the X-ray attenuation expression of the above Formula (2). The X-ray photon number spectrum can be obtained by dividing this X-rays energy spectrum by energy of each X-ray. The calculation unit 202C calculates the average energy of X-rays using the above Formula (3) by dividing the integral value of energy intensity by the integral value of the number of photons. The calculation unit 202C calculates the average energy of X-rays through the above calculation process. Meanwhile, for the calculation of the X-ray spectrum, a known Kramers or Birch approximation or the like may be used.

The narrowing-down unit 203C narrows down trained model candidates from the plurality of trained models 206C built in advance on the basis of the value of the average energy calculated by the calculation unit 202C. That is, the narrowing-down unit 203C compares the calculated value of the average energy with the value of the average energy of X-rays in the image data used to build the plurality of trained models 206C, and narrows down the plurality of trained models 206C built by image data with close average energy values as candidates. More specifically, in a case where the value of the average energy calculated by the calculation unit 202C is 53 keV, the narrowing-down unit 203C sets a trained model 206C built by image data with average energy values of 40 keV, 50 keV, and 60 keV at which the difference from the value is less than a predetermined threshold (for example, 15 keV) as a trained model candidate.

the selection unit 204C selects a trained model 206C to be finally used for noise removal processing of the X-ray transmission image of the subject F from the candidates narrowed down by the narrowing-down unit 203C. Specifically, the selection unit 204C acquires an X-ray transmission image captured by irradiating the jig with X-rays in the image acquiring device 1, and selects a trained model 206C to be finally used on the basis of the image characteristics of the X-ray transmission image. In this case, the selection unit 204C analyzes energy characteristics, noise characteristics, resolution characteristics, or the like as the image characteristics of the X-ray transmission image, and selects a trained model 206C on the basis of the analysis results.

More specifically, the selection unit 204C acquires an X-ray transmission image for a flat plate-like member of which the thickness and material are known as a jig and in which the relationship between the average energy of X-rays and the X-ray transmittance are known, compares the luminance of the X-ray image passing through the jig with the luminance of the X-ray image passing through the air, and calculates the transmittance of the X-rays of one point (or average of a plurality of points) in the jig. For example, in a case where the luminance of the X-ray image passing through the jig is 5,550 and the luminance of the X-ray image passing through the air is 15,000, the transmittance is calculated to be 37%. The selection unit 204C then specifies the average energy of transmitted X-rays (for example, 50 keV) estimated from the transmittance of 37% as the energy characteristics of the X-ray transmission image of the jig. The selection unit 204C selects one trained model 206C built by image data with average energy closest to the specified value of the average energy.

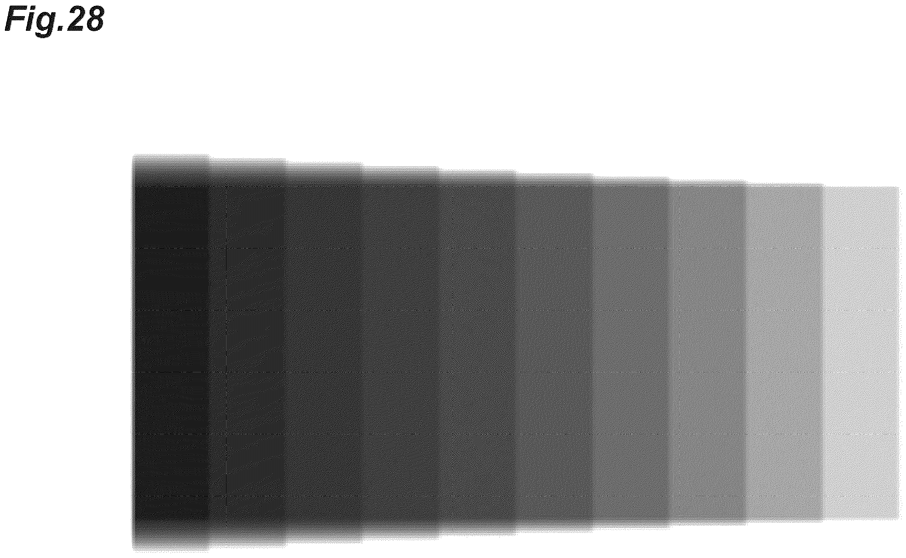

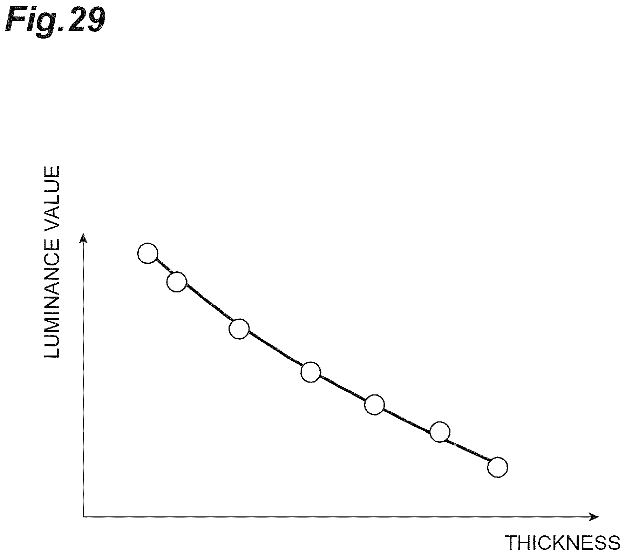

In addition, the selection unit 204C may analyze the characteristics at a plurality of points of the jig of which the thickness or material changes as the energy characteristics of the X-ray transmission image of the jig. FIG. 28 is a diagram illustrating an example of an X-ray transmission image to be analyzed by the selection unit 204C. FIG. 28 is an X-ray transmission image of a jig having a shape of which the thickness changes stepwise. The selection unit 204C selects a plurality of regions of interest (ROI) with different thicknesses from such an X-ray transmission image, analyzes the luminance average value for each of the plurality of regions of interest, and acquires a thickness-luminance characteristic graph as energy characteristics. FIG. 29 shows an example of a thickness-luminance characteristic graph acquired by the selection unit 204C.

Further, in a similar way, the selection unit 204C acquires a thickness-luminance characteristic graph for the image data used to build the trained model 206C narrowed down by the narrowing-down unit 203C, and selects a trained model 206C built by image data having characteristics closest to the characteristic graph acquired for the jig as a final trained model 206C. However, the image characteristics of the image data used to build the trained model 206C may refer to those calculated outside the control device 20C in advance. In this way, by setting a plurality of regions of interest, it is possible to select a trained model which is optimal for noise removal from the X-ray transmission image of the subject F. Particularly, it is possible to accurately estimate differences in X-ray spectra or differences in filter effects during the measurement of the X-ray transmission image.

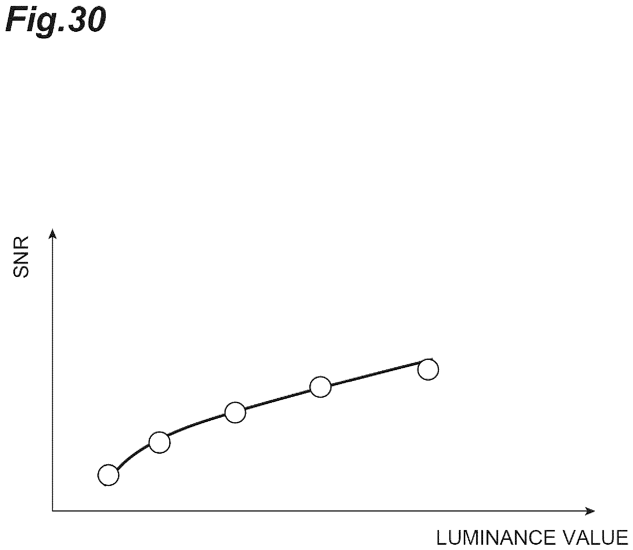

In addition, the selection unit 204C can also analyze the luminance value and noise for each of the plurality of regions of interest as the noise characteristics of the X-ray transmission image of the jig and acquire a characteristic graph of the luminance-to-noise ratio as noise characteristics. That is, the selection unit 204C selects a plurality of regions of interest ROI having different thicknesses or materials from the X-ray transmission image, analyzes the standard deviation of the luminance values and the average value of the luminance values of the plurality of regions of interest ROI, and acquires a characteristic graph of luminance-SNR (S/N ratio) as noise characteristics. In this case, the selection unit 204C calculates the SNR for each region of interest ROI by SNR = (average value of luminance values) ÷ (standard deviation of luminance values). FIG. 30 shows an example of a luminance-SNR characteristic graph acquired by the selection unit 204C. The selection unit 204C then selects a trained model 206C built by image data having noise characteristics closest to the acquired characteristic graph as a final trained model 206C.

Here, the selection unit 204C may acquire, as the noise characteristics, a characteristic graph with the vertical axis as noise calculated from the standard deviation of luminance values instead of the above luminance-SNR characteristic graph. By using such a luminance-noise characteristic graph, for each signal amount detected by the X-ray detection camera 10, a dominant noise factor (such as shot noise or readout noise) can be specified from the slope of the graph in a region of each signal amount, and a trained model 206C can be selected on the basis of the specified result.

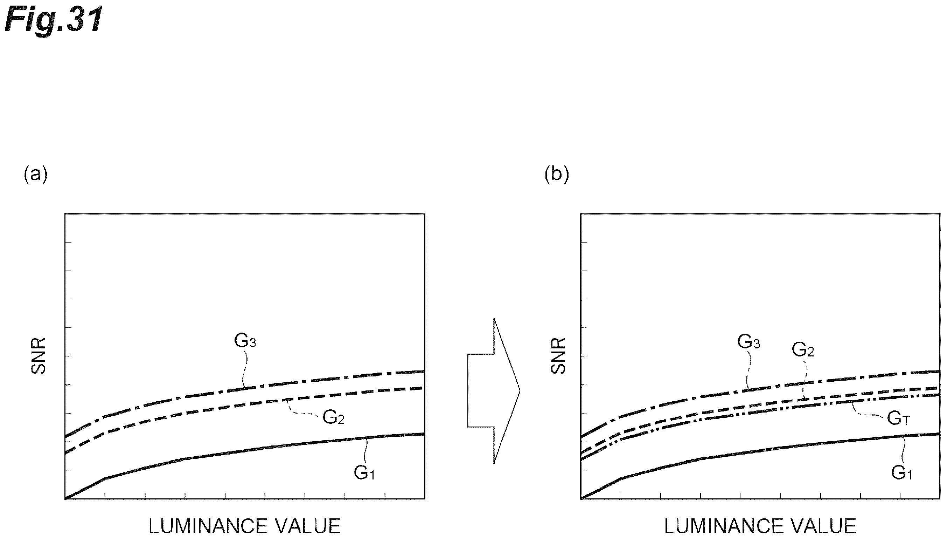

FIG. 31 is a diagram illustrating a function of selection of a trained model based on image characteristics which is performed by the selection unit 204C. In FIG. 31, part (a) shows luminance-SNR characteristic graphs $G_1$, $G_2$, and $G_3$ of image data used to build the plurality of trained models 206C, and part (b) shows a luminance-SNR characteristic graph $G_T$ of the X-ray transmission image obtained by capturing an image of the jig in addition to these characteristic graphs $G_1$, $G_2$, and $G_3$. In the case of such characteristic graphs $G_1$, $G_2$, $G_3$, and $G_T$, the selection unit 204C functions to select a trained model 206C built by image data of the characteristic graph $G_2$ which is closest to the characteristics of the characteristic graph $G_T$. At the time of selection, the selection unit 204C calculates the SNR error for each luminance value at regular intervals between each of the characteristic graphs $G_1$, $G_2$, and $G_3$ and the characteristic graph $G_T$, calculates the root mean squared error (RMSE) of these errors, and selects the trained model 206C corresponding to the characteristic graphs $G_1$, $G_2$, and $G_3$ having the lowest root mean squared error. In addition, the selection unit 204C can select the trained model 206C in the same way even in a case where selection is made using energy characteristics.

The selection unit 204C can also select a trained model 206C on the basis of the characteristics of the image after noise removal processing is executed by applying a plurality of trained models to the X-ray transmission image of the jig.

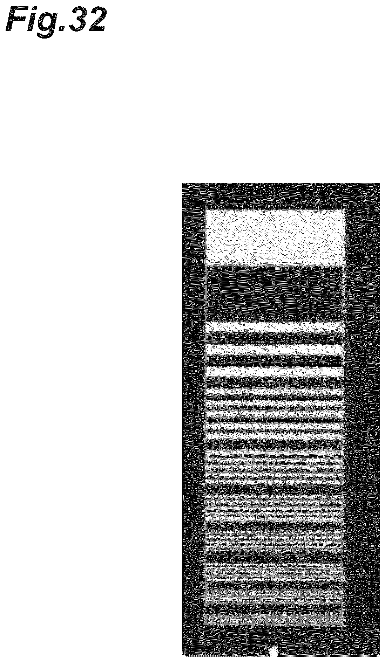

For example, the selection unit 204C uses an X-ray transmission image obtained by capturing an image of a jig having charts of various resolutions, applies the plurality of trained models 206C to the image, and evaluates an image after noise removal generated as a result. The selection unit 204C then selects a trained model 206C used for an image with the smallest change in resolution before and after the noise removal processing. FIG. 32 shows an example of an X-ray transmission image used to evaluate resolution. In this X-ray transmission image, a chart of which the resolution changes stepwise in one direction is an imaging target. The resolution of the X-ray transmission image can be measured using a modulation transfer function (MTF) or a contrast transfer function (CTF).

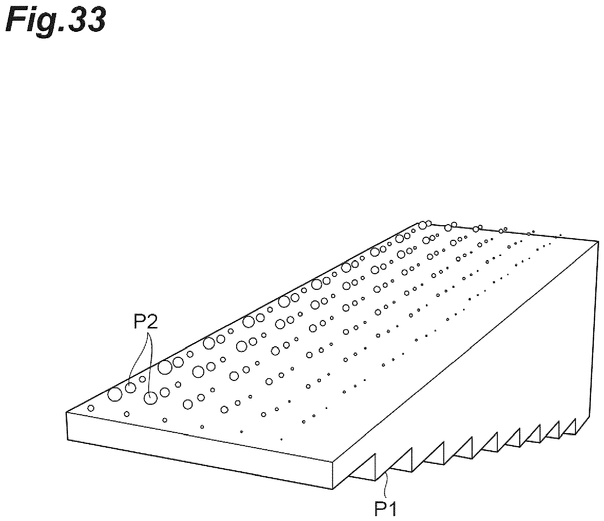

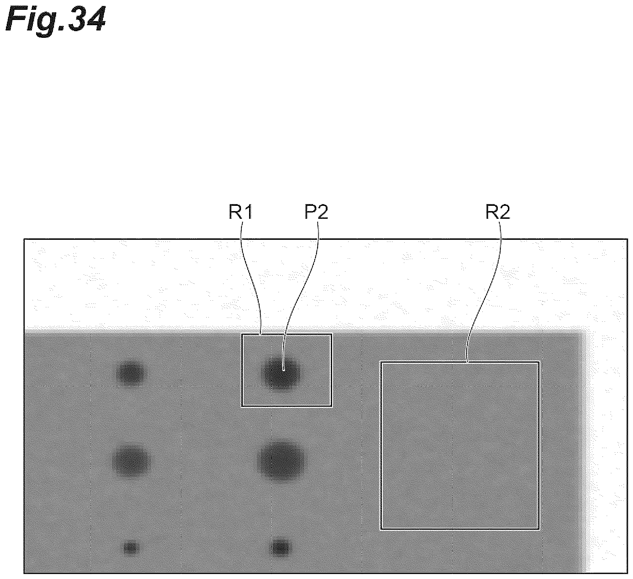

In addition to the above evaluation of the change in resolution, the selection unit 204C may evaluate the characteristics of the luminance-to-noise ratio of the image after noise removal and select the trained model 206C used to generate the image with the highest characteristics. FIG. 33 shows an example of the structure of a jig used to evaluate the luminance-to-noise ratio. For example, as a jig, a member P1 of which the thickness changes stepwise in one direction may be dotted with foreign substances P2 having various materials and various sizes. FIG. 34 shows an X-ray transmission image after noise removal processing which is obtained for the jig in FIG. 33. The selection unit 204C selects an image region R1 including the image of the foreign substances P2 in the X-ray transmission image and an image region R2 not including the image of the foreign substances P2 in the vicinity of the region R1, and calculates the minimum value $L_{MIN}$ of luminance in the image region R1, the average value $L_{AVE}$ of luminance in the image region R2, and the standard deviation $L_{SD}$ of luminance in the image region R2. The selection unit 204C then calculates the luminance-to-noise ratio CNR using the following formula.

$$CNR = (L_{AVE} - L_{MIN})/L_{SD}$$

Further, the selection unit 204C calculates the luminance-to-noise ratio CNR for each of the X-ray transmission images after the plurality of trained models 206C are applied, and selects the trained model 206C used to generate the X-ray transmission image with the highest luminance-to-noise ratio CNR.

Alternatively, the selection unit 204C may perform the calculation using the following formula on the basis of the average value $L_{AVE\_R1}$ of luminance in the image region R1, the average value $L_{AVE\_R2}$ of luminance in the image region R2, and the standard deviation $L_{SD}$ of luminance in the image region R2.

$$CNR = (L_{AVE\_R1} - L_{MIN\_R2})/L_{SD}$$

The processing unit 205C generates an output image by applying the trained model 206C selected by the selection unit 204C to the X-ray transmission image acquired for the subject F and executing image processing of removing noise. The processing unit 205C then outputs the generated output image to the display device 30 or the like.

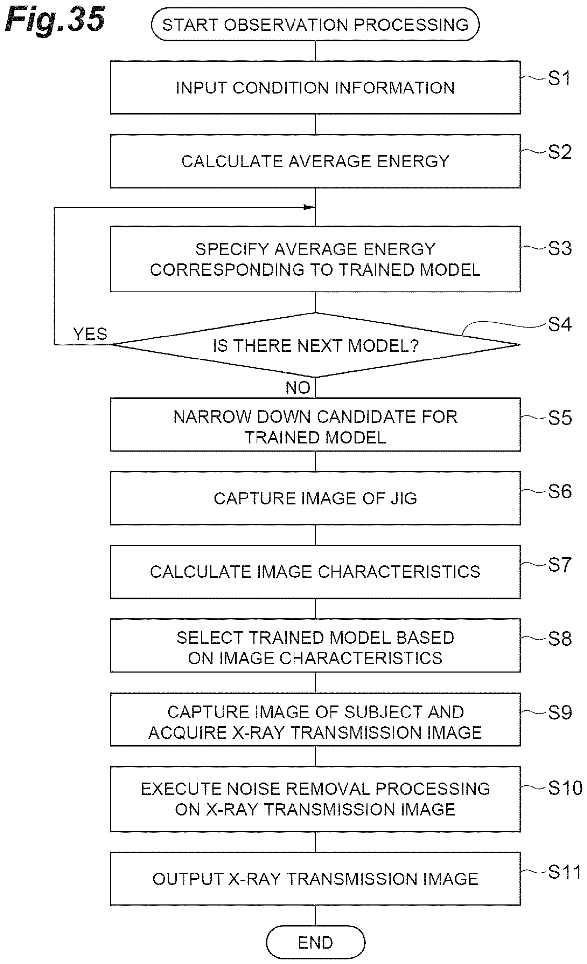

Next, a procedure of observing an the X-ray transmission image of the subject F using the image acquiring device 1 according to the second embodiment, that is, a flow of a radiographic image acquisition method according to the second embodiment will be described. FIG. 35 is a flowchart illustrating a procedure of observation processing performed by the image acquiring device 1.

First, the control device 20C accepts an input of condition information indicating the operating conditions of the X-ray irradiator 50, the imaging conditions of the X-ray detection camera 10, or the like from an operator (user) of the image acquiring device 1 (step S1). Next, the control device 20C calculates the value of the average energy of the X-rays detected by the X-ray detection camera 10 on the basis of the condition information (step S2).

Further, the control device 20C specifies the value of the average energy of the X-rays in the image data used to build the trained model 206C stored in the control device 20C (step S3). Thereafter, the specification of the value of the average energy of the X-rays is repeated for all the trained models 206C stored in the control device 20C (step S4).

Next, the control device 20C narrows down the candidates for the plurality of trained models 206C by compared the calculated values of the average energy of the X-rays (step S5). Further, a jig is set in the image acquiring device 1 and an image of the jig is captured, whereby an X-ray transmission image of the jig is acquired (step S6).

Thereafter, the control device 20C acquires the image characteristics of the X-ray transmission image of the jig (such as the value of average energy of X-rays, thickness-luminance characteristics, the characteristics of luminance-to-noise ratio, luminance-noise characteristics, or characteristics of resolution change) (step S7). The control device 20C selects a final trained model 206C on the basis of the acquired image characteristics (step S8).

Further, the subject F is set and an image of the subject F is captured in the image acquiring device 1, whereby the X-ray transmission image of the subject F is acquired (step S9). Next, the control device 20C applies the finally selected trained model 206C to the X-ray transmission image of the subject F, and thus noise removal processing is executed on the X-ray transmission image (step S10). Finally, the control device 20C outputs an output image that is an X-ray transmission image on which noise removal processing is performed to the display device 30 (step S11).

With the image acquiring device 1 described above, it is also possible to remove noise components while increasing signal components in an X-ray transmission image, and to effectively improve the S/N ratio in the X-ray transmission image. In addition, the average energy of the X-rays passing through the subject F is calculated on the basis of the operating conditions of the source of the X-rays or the imaging conditions of the X-ray transmission image when the X-ray transmission image of the subject F is acquired. The candidates for the trained model 206C used for noise removal are narrowed down from the trained models 206C built in advance on the basis of the average energy. Thereby, since the trained model 206C corresponding to the average energy of the X-rays which are imaging targets is used for noise removal, it is possible to realize noise removal corresponding to the relationship between the luminance and noise in the X-ray transmission image. As a result, it is possible to effectively remove noise in the X-ray transmission image, and to improve, for example, the performance of foreign substance detection. Particularly, in the X-ray transmission image, the mode of noise changes depending on differences in a tube voltage, a filter, a scintillator, conditions of an X-ray detection camera (a gain setting value, a circuit noise value, an amount of saturated charge, a conversion coefficient value (e-/count), and the line rate of the camera), a subject, and the like. For this reason, in a case where noise removal is attempted to be realized through machine learning, it is necessary to prepare a plurality of learning models trained under various conditions. Conventionally, it has not been realized to select a learning model that matches the aspect of noise from a plurality of learning models in accordance with the conditions during the measurement of the X-ray transmission image. According to the present embodiment, the trained model 206C corresponding to the average energy of the X-rays which are imaging targets is selected, and thus the selection of a learning model that always matches the aspect of noise is realized.

Generally, an X-ray transmission image contains noise derived from X-ray generation. Increasing the X-ray dose can also be considered to improve the S/N ratio of the X-ray transmission image, but in that case, increasing the X-ray dose results in a problem of an increase in the exposure dose of the sensor and a decrease in the life of the sensor, which leads to a decrease in the life of the X-ray source, and thus it is difficult to achieve both an improvement in the S/N ratio and a long life. In the present embodiment, since there is no need to increase the X-ray dose, it is possible to achieve both an improvement in the S/N ratio and a long life.

In addition, the control device 20C of the present embodiment has a function of executing image processing of removing noise from the X-ray transmission image of the subject F using the selected trained model 206C. With such a function, it is possible to realize noise removal corresponding to the relationship between the luminance and noise in the X-ray transmission image, and to effectively remove noise in the X-ray transmission image.

In addition, the control device 20C of the present embodiment has a function of narrowing down candidates for the trained model by comparing the value of the average energy of the X-rays calculated from selection information with the value of the average energy specified from the image data used to build the trained model 206C. With such a function, it is possible to reliably realize noise removal corresponding to the relationship between the luminance and noise in the X-ray transmission image.

Further, the control device 20C of the present embodiment has a function of selecting a trained model 206C from candidates on the basis of the image characteristics of the X-ray transmission image of the jig. With such a function, it is possible to select a trained model 206C which is optimal for noise removal from the X-ray transmission image of the subject F. As a result, it is possible to more reliably realize noise removal corresponding to the relationship between the luminance and noise in the X-ray transmission image.

[Modification example of second embodiment]

Although the control device 20C of the second embodiment selects candidates for the trained model 206C on the basis of the value of the average energy of the X-rays calculated from the condition information, it may have a function of coping with performance degradation of the X-ray detection camera 10 and output fluctuation or performance degradation of the X-ray irradiator 50.

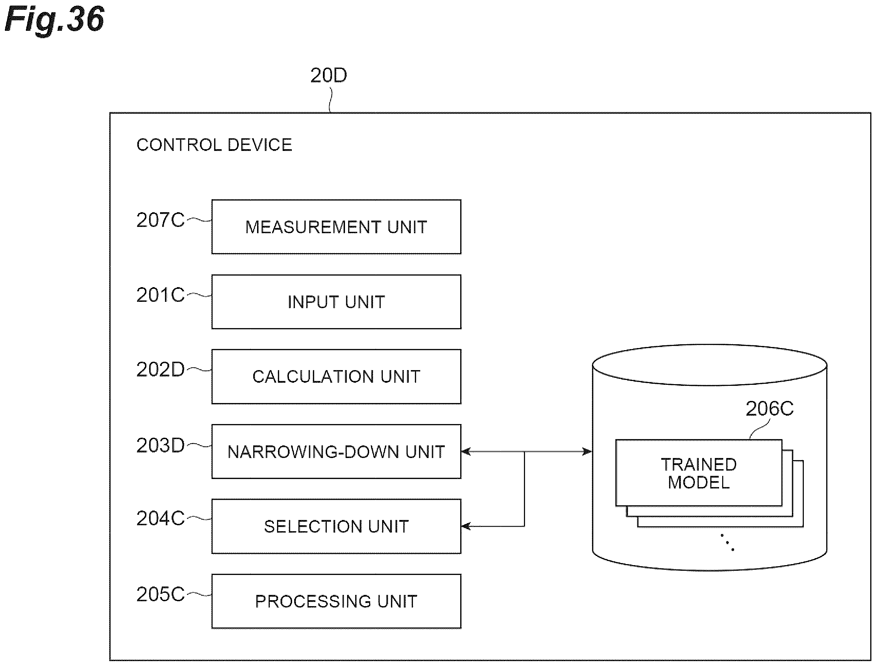

FIG. 36 is a block diagram illustrating a functional configuration of a control device 20D according to a modification example of the second embodiment. The control device 20D is different from the control device 20C according to the second embodiment in having a measurement unit 207C and in the functions of a calculation unit 202D and a narrowing-down unit 203D.

In the control device 20C, the trained models 206C are narrowed down on the assumption that there are no performance degradation of the X-ray detection camera 10 and no output fluctuation or performance degradation of the X-ray irradiator 50, and that the relationship between the luminance and noise in the X-ray transmission image can be estimated from the average energy of the X-rays. On the other hand, the control device 20D according to the present modification example has a function of calculating X-ray conversion coefficients and narrowing down the trained models 206C on the basis of the X-ray conversion coefficients in consideration of the performance degradation of the X-ray detection camera 10, the output fluctuation of the X-ray irradiator 50, or the performance degradation thereof. The X-ray conversion coefficient is a parameter indicating the efficiency with which X-rays are converted into visible light by a scintillator and then converted into electrons (electrical signals) by a camera sensor.

Generally, the X-ray conversion coefficient $F_T$ can be calculated using the following formula, where the average energy of X-rays is E [keV], the amount of light emitted by the scintillator is EM [photon/keV], the coupling efficiency in the sensor is C, and the quantum efficiency of the sensor is QE.

$$F_T = E \times EM \times C \times QE$$

In addition, the S/N ratio (SNR) in the X-ray transmission image is obtained from the following formula using the X-ray conversion coefficient $F_T$, the number of X-ray photons $N_P$, and the camera readout noise Nr.

$$SNR = F_T N_P / \{(F_T N_P + Nr^2)^{1/2}\}$$

Thereby, the relationship between the luminance and noise in the X-ray transmission image after considering the performance degradation of the camera can be estimated on the basis of the X-ray conversion coefficient $F_T$.

The measurement unit 207C of the control device 20D has a function of measuring the amount of decrease in the amount of light emission EM as the performance degradation of the scintillator layer 11, the amount of decrease in the quantum efficiency QE of the sensor as the performance degradation of the scan camera 12, and the amount of change in the average energy E as the output fluctuation and performance degradation of the X-ray irradiator 50. For example, the measurement unit 207C measures the amount of decrease in the amount of light emission between the scintillator layer 11 in a state where there is no performance degradation (state when new) and the current scintillator layer 11 and estimates the current amount of light emission EM from the amount of decrease. In addition, the measurement unit 207C measures the amount of decrease in luminance between the scan camera 12 in a state where there is no performance degradation (state when new) and the current scan camera 12 and estimates the current quantum efficiency QE from the amount of decrease. In addition, the measurement unit 207C estimates the current average energy E from the amount of change in average energy between the X-ray irradiator 50 in a state where there is no performance degradation (state when new) and the current X-ray irradiator 50. The average energy E may be obtained from imaging data of a flat plate-like member of which the thickness and material are known and in which the relationship between the average energy of X-rays and the X-ray transmittance is known, obtained from imaging data at a plurality of points on a jig of which the thickness or material changes, or the like.

The calculation unit 202D of the control device 20D calculates the X-ray conversion coefficient $F_T$ using the calculated average energy E of the X-rays and the amount of light emission EM and quantum efficiency QE estimated by the measurement unit 207C. The narrowing-down unit 203D of the control device 20D has a function of narrowing down candidates for the trained model 206C by comparing the calculated X-ray conversion coefficient $F_T$ with the X-ray conversion coefficient $F_T$ in the image data used to build the trained model 206C.

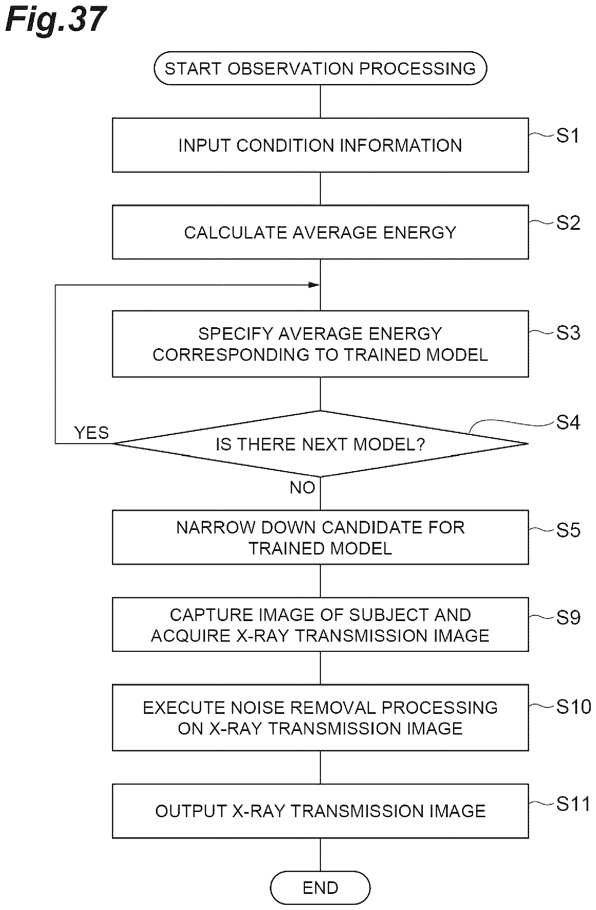

In addition, although the control device 20D of the modification example narrows down candidates for trained models and then selects a trained model on the basis of the image characteristics obtained by capturing an image of the jig, it may execute noise removal processing on the X-ray transmission image of the subject without capturing an image of the jig. FIG. 37 is a flowchart illustrating a procedure of observation processing performed by the image acquiring device 1 according to another modification example. In this way, it is also possible to omit the processes of steps S6 to S8 in FIG. 35, and to execute noise removal processing using a trained model narrowed down on the basis of the average energy.

[Third embodiment]

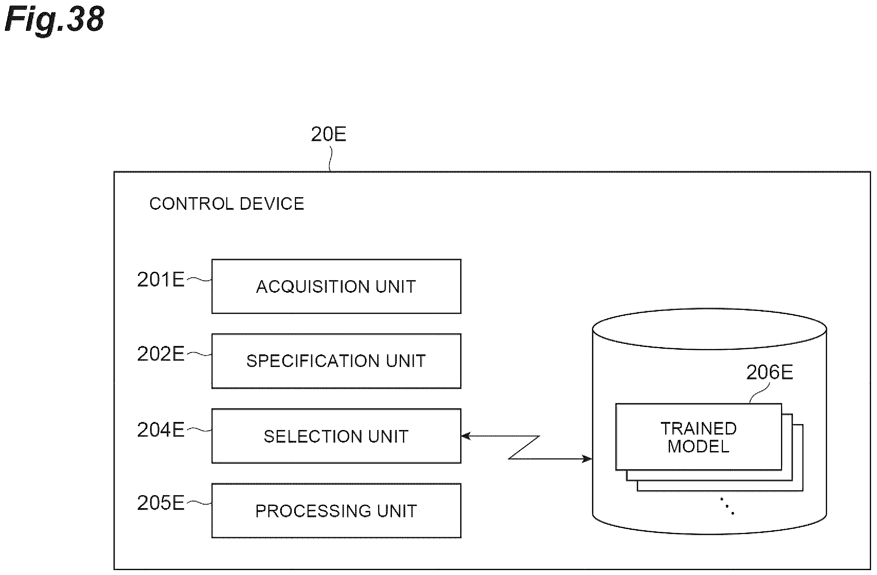

FIG. 38 is a block diagram illustrating a functional configuration of a control device 20E according to a third embodiment. The control device 20E includes an acquisition unit 201E, a specification unit 202E, a selection unit 204E, and a processing unit 205E.

In addition, the control device 20E stores in advance a plurality of trained models 206E that execute noise removal processing on an X-ray transmission image. Each of the plurality of trained models 206E is a learning model based on machine learning which is built in advance using image data as training data. Examples of machine learning include supervised learning, deep learning, reinforcement learning, neural network learning, and the like. In the present embodiment, the two-dimensional convolutional neural network described in the paper "Beyond a Gaussian Denoiser: Residual Learning of Deep CNN for Image Denoising" authored by Kai Zhang et al. is adopted as an example of a deep learning algorithm. The plurality of trained models 206E may be generated by an external computer or the like and downloaded to the control device 20E, or may be generated within the control device 20E.

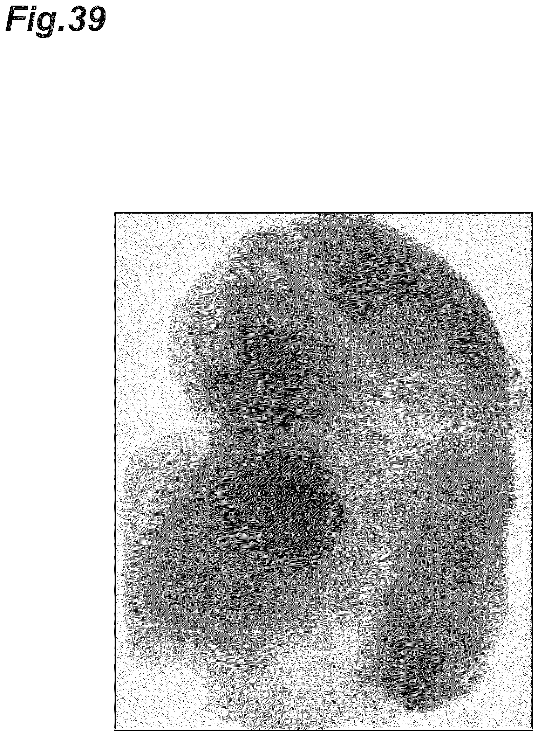

FIG. 39 shows an example of image data which is training data used to build the trained model 206E. As the training data, X-ray transmission images of patterns having various thicknesses, various materials, and various resolutions which are imaging targets can be used. The example shown in FIG. 39 is an example of an X-ray transmission image generated for chicken. This image data may be an X-ray transmission image actually generated for a plurality of types of subjects using the image acquiring device 1, or may be image data generated by simulation calculation. The X-ray transmission image may be acquired using a device different from the image acquiring device 1. In addition, the X-ray transmission image and the image data generated by simulation calculation may be combined. Each of the plurality of trained models 206E is built in advance using image data obtained for transmitted X-rays with different average energy, that is, image data of which the noise distribution is known. The average energy of X-rays in the image data is set to different values in advance by setting the operating conditions of the X-ray irradiator (radiation source) 50 of the image acquiring device 1, the imaging conditions of the image acquiring device 1, or the like, or by setting the operating conditions of the X-ray irradiator 50 or the imaging conditions during simulation calculation. That is, the plurality of trained models 206E are built through machine learning using, as training data, an training image which is an X-ray image corresponding to the average energy related to X-rays passing through the subject F calculated on the basis of condition information indicating the operating conditions of the X-ray irradiator (radiation source) 50 when the X-ray transmission image of the subject F is captured, the imaging conditions of the X-ray detection camera 10, or the like (building step). For example, in the present embodiment, the plurality of trained models 206E are built using a plurality of frames (for example, 20,000 frames) of a plurality of types of image data each having an average energy of 10 keV, 20 keV, 30 keV, ⋯ in 10 keV increments.

The image data which is training data used to build the trained model 206E is generated by a creation procedure similar to the creation procedure in the above-described first embodiment.

Hereinafter, referring to FIG. 38, the details of the functions of each functional unit of the control device 20E will be described.

The acquisition unit 201E acquires an X-ray transmission image captured by irradiating the jig and the subject F with X-rays using the image acquiring device 1. The jig to be used is a flat plate-like member of which the thickness and material are known and in which the relationship between the average energy of X-rays and the X-ray transmittance is known, or a jig having a chart which is imaged at various resolutions. That is, the acquisition unit 201E acquires an X-ray transmission image of the jig captured using the image acquiring device 1 in advance of observation processing of the subject F. The acquisition unit 201E then acquires an X-ray transmission image of the subject F captured using the image acquiring device 1 at a timing after the trained model 206E is selected on the basis of the X-ray transmission image of the jig. However, the timing of acquisition of the X-ray transmission images of the jig and the subject F is not limited to the above, and may be simultaneous or reversed.

The specification unit 202E specifies the image characteristics of the X-ray transmission image of the jig acquired by the acquisition unit 201E. Specifically, the selection unit 204E specifies energy characteristics, noise characteristics, resolution characteristics, frequency characteristics, or the like as the image characteristics of the X-ray transmission image.

For example, in a case where a flat plate-like member of which the thickness and material are known is used as the jig, the specification unit 202E compares the luminance of the X-ray image passing through the jig with the luminance of the X-ray image passing through the air, and calculates the transmittance of the X-rays at one point (or average of a plurality of points) in the jig. For example, in a case where the luminance of the X-ray image passing through the jig is 5,550 and the luminance of the X-ray image passing through the air is 15,000, the transmittance is calculated to be 37%. The specification unit 202E then specifies the average energy of transmitted X-rays (for example, 50 keV) estimated from the transmittance of 37% as the energy characteristics of the X-ray transmission image of the jig.

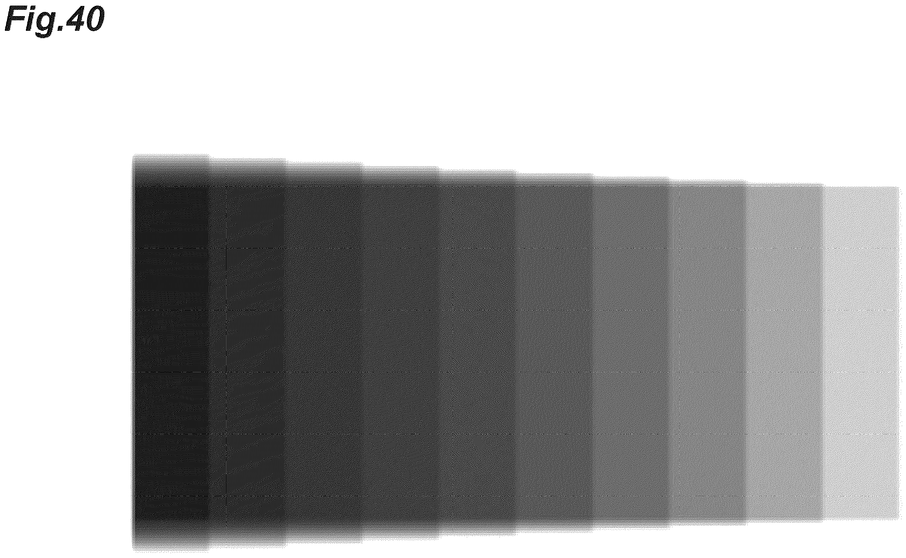

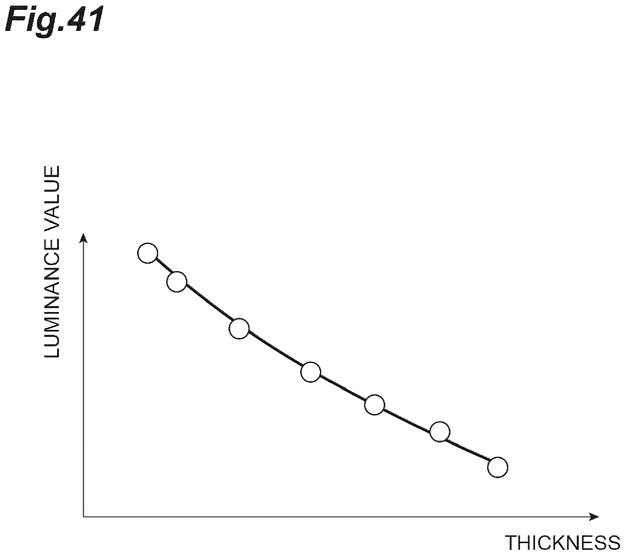

In addition, the specification unit 202E may analyze the characteristics at a plurality of points of the jig of which the thickness or material changes as the energy characteristics of the X-ray transmission image of the jig. FIG. 40 is a diagram illustrating an example of an X-ray transmission image to be analyzed by the specification unit 202E. FIG. 40 is an X-ray transmission image of a jig having a shape of which the thickness changes stepwise. The specification unit 202E selects a plurality of regions of interest (ROI) with different thicknesses from such an X-ray transmission image, analyzes the luminance average value for each of the plurality of regions of interest, and acquires a thickness-luminance characteristic graph as energy characteristics. FIG. 41 shows an example of a thickness-luminance characteristic graph acquired by the specification unit 202E.

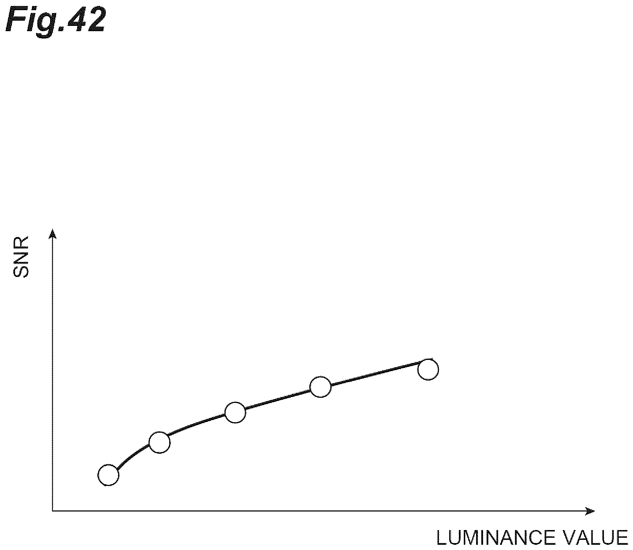

In addition, the specification unit 202E can also analyze the luminance value and noise for each of the plurality of regions of interest as the noise characteristics of the X-ray transmission image of the jig and acquire a characteristic graph of the luminance-to-noise ratio as noise characteristics. That is, the specification unit 202E selects a plurality of regions of interest ROI having different thicknesses or materials from the X-ray transmission image, analyzes the standard deviation of the luminance values and the average value of the luminance values of the plurality of regions of interest ROI, and acquires a characteristic graph of luminance-SNR (S/N ratio) as noise characteristics. In this case, the specification unit 202E calculates the SNR for each region of interest ROI by SNR = (average value of luminance values) ÷ (standard deviation of luminance values). FIG. 42 shows an example of a luminance-SNR characteristic graph acquired by the specification unit 202E. Here, the specification unit 202E may acquire, as the noise characteristics, a characteristic graph with the vertical axis as noise calculated from the standard deviation of luminance values instead of the above luminance-SNR characteristic graph.

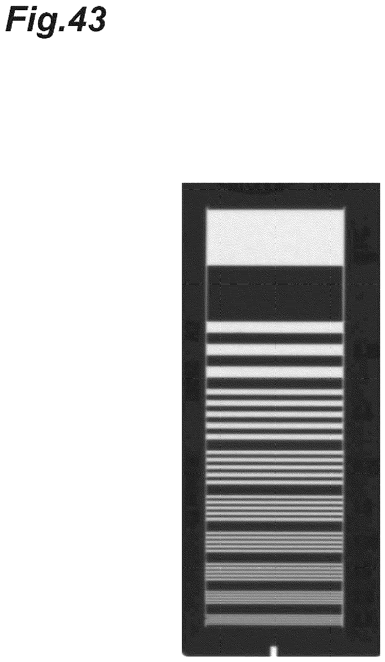

In addition, in a case where a jig having a chart is used, the specification unit 202E can also acquire the distribution of resolution in the X-ray transmission image of the jig as the resolution characteristics. Further, the specification unit 202E also has a function of acquiring resolution characteristics with respect to an image after noise removal processing is performed by applying the plurality of trained models 206E to the X-ray transmission image of the jig. FIG. 43 shows an example of an X-ray transmission image used to evaluate resolution. In this X-ray transmission image, a chart of which the resolution changes stepwise in one direction is an imaging target. The resolution of the X-ray transmission image can be measured using a modulation transfer function (MTF) or a contrast transfer function (CTF).

Referring back to FIG. 38, the selection unit 204E selects a trained model 206E to be finally used for noise removal processing of the X-ray transmission image of the subject F from the plurality of trained models 206E stored in the control device 20E on the basis of the image characteristics acquired by the specification unit 202E. That is, the selection unit 204E compares the image characteristics specified by the specification unit 202E with the image characteristics specified from the image data used to build the plurality of trained models 206E, and selects a trained model 206E which is similar to both.

For example, the selection unit 204E selects one trained model 206E built by image data with the average energy closest to the value of the average energy of transmitted X-rays specified by the specification unit 202E.

In addition, in the same manner as the specification method performed by the specification unit 202E, the selection unit 204E acquires a thickness-luminance characteristic graph for the image data used to build the plurality of trained models 206E, and selects, as a final trained model 206E, a trained model 206E built by image data having characteristics closest to the thickness-luminance characteristic graph acquired for the jig. However, the image characteristics of the image data used to build a trained model 206E may refer to those calculated in advance outside the control device 20E. In this manner, by using the image characteristics obtained by setting a plurality of regions of interest, it is possible to select a trained model which is optimal for noise removal of the X-ray transmission image of the subject F. Particularly, it is possible to accurately estimate differences in X-ray spectra or differences in filter effects during the measurement of the X-ray transmission image.

In addition, the selection unit 204E may select, as a final trained model 206E, a trained model 206E built by image data having the characteristics of the luminance-to-noise ratio closest to the characteristics of the luminance-to-noise ratio acquired by the specification unit 202E. However, the image characteristics of the image data used to build a trained model 206E may be acquired from the image data by the selection unit 204E, or may refer to those calculated in advance outside the control device 20E. Here, the selection unit 204E may select a trained model 206E using the luminance-noise characteristics as the noise characteristics instead of the characteristics of the luminance-to-noise ratio. By using such luminance-noise characteristics, for each signal amount detected by the X-ray detection camera 10, a dominant noise factor (such as shot noise or readout noise) can be specified from the slope of the graph in a region of each signal amount, and a trained model 206E can be selected on the basis of the specified result.

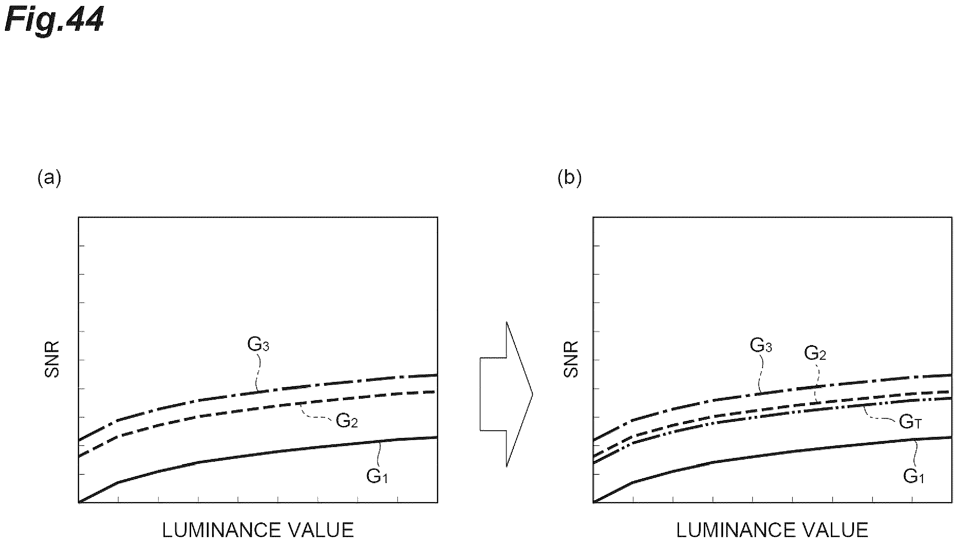

FIG. 44 is a diagram illustrating a function of selection of a trained model based on image characteristics which is performed by the selection unit 204E. In FIG. 44, part (a) shows luminance-SNR characteristic graphs $G_1$, $G_2$, and $G_3$ of image data used to build the plurality of trained models 206E, and part (b) shows a luminance-SNR characteristic graph $G_T$ of the X-ray transmission image obtained by capturing an image of the jig in addition to these characteristic graphs $G_1$, $G_2$, and $G_3$. In the case of such characteristic graphs $G_1$, $G_2$, $G_3$, and $G_T$, the selection unit 204E functions to select a trained model 206E built by image data of the characteristic graph $G_2$ which is closest to the characteristics of the characteristic graph $G_T$. At the time of selection, the selection unit 204E calculates the SNR error for each luminance value at regular intervals between each of the characteristic graphs $G_1$, $G_2$, and $G_3$ and the characteristic graph $G_T$, calculates the root mean squared error (RMSE) of these errors, and selects the trained model 206E corresponding to the characteristic graphs $G_1$, $G_2$, and $G_3$ having the lowest root mean squared error. In addition, the selection unit 204E can select the trained model 206E in the same way even in a case where selection is made using energy characteristics.

The selection unit 204E can also select a trained model 206E used to generate an image with relatively excellent characteristics on the basis of the characteristics of the image after noise removal processing is executed by applying a plurality of trained models to the X-ray transmission image of the jig.

For example, the selection unit 204E uses an X-ray transmission image obtained by capturing an image of a jig having charts of various resolutions, applies the plurality of trained models 206E to the image, and evaluates the resolution characteristics of an image after noise removal generated as a result. The selection unit 204E then selects a trained model 206E used for an image with the smallest change in resolution of each distribution before and after the noise removal processing.

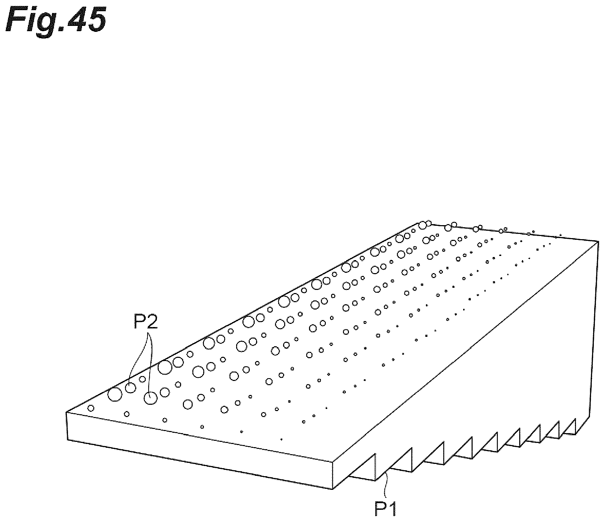

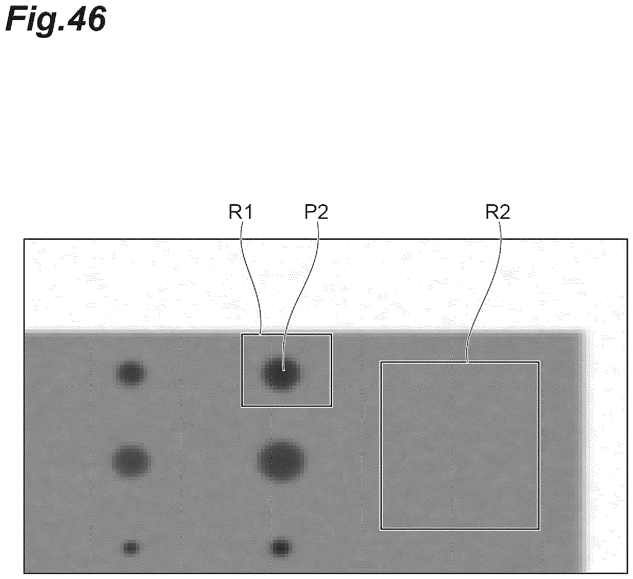

In addition to the above evaluation of the change in resolution, the selection unit 204E may evaluate the characteristics of the luminance-to-noise ratio of the image after noise removal and select the trained model 206E used to generate the image with the highest characteristics. FIG. 45 shows an example of the structure of a jig used to evaluate the luminance-to-noise ratio. For example, as a jig, a member P1 of which the thickness changes stepwise in one direction may be dotted with foreign substances P2 having various materials and various sizes. FIG. 46 shows an X-ray transmission image after noise removal processing which is obtained for the jig in FIG. 45. The selection unit 204E selects an image region R1 including the image of the foreign substances P2 in the X-ray transmission image and an image region R2 not including the image of the foreign substances P2 in the vicinity of the region R1, and calculates the minimum value $L_{MIN}$ of luminance in the image region R1, the average value $L_{AVE}$ of luminance in the image region R2, and the standard deviation $L_{SD}$ of luminance in the image region R2. The selection unit 204E then calculates the luminance-to-noise ratio CNR using the following formula.

$$CNR = (L_{AVE}-L_{MIN})/L_{SD}$$

Further, the selection unit 20E calculates the luminance-to-noise ratio CNR for each of the X-ray transmission images after the plurality of trained models 206E are applied, and selects the trained model 206E used to generate the X-ray transmission image with the highest luminance-to-noise ratio CNR.

Alternatively, the selection unit 204E may perform the calculation using the following formula on the basis of the average value $L_{AVE\_R1}$ of luminance in the image region R1, the average value $L_{AVE\_R2}$ of luminance in the image region R2, and the standard deviation $L_{SD}$ of luminance in the image region R2.

$$CNR = (L_{AVE\_R1} - L_{MIN\_R2})/L_{SD}$$

The processing unit 205E generates an output image by applying the trained model 206E selected by the selection unit 204E to the X-ray transmission image acquired for the subject F and executing image processing of removing noise. The processing unit 205E then outputs the generated output image to the display device 30 or the like.

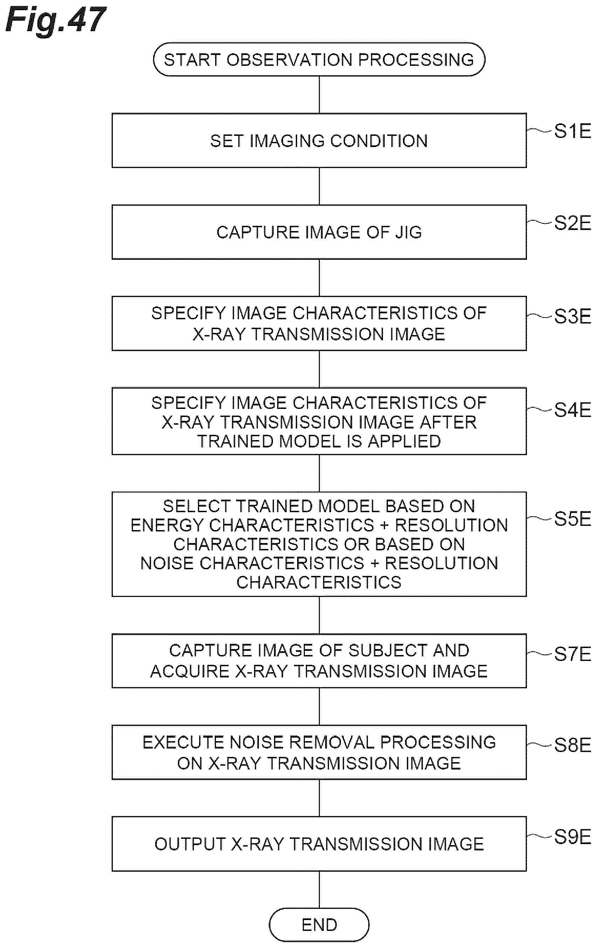

Next, a procedure of observing an X-ray transmission image of the subject F using the image acquisition device 1 according to the third embodiment, that is, a flow of the radiographic image acquisition method according to the third embodiment will be described. FIG. 47 is a flowchart illustrating a procedure of observation processing performed by the image acquisition device 1.

First, the operator (user) of the image acquiring device 1 sets imaging conditions in the image acquiring device 1, such as the tube voltage of the X-ray irradiator 50 or the gain of the X-ray detection camera 10 (step S1E). Next, a jig is set in the image acquiring device 1, and an X-ray transmission image is acquired for the jig by the control device 20E (step S2E). In this case, X-ray transmission images of a plurality of types of jigs may be sequentially acquired.

Accordingly, the control device 20E specifies the image characteristics (energy characteristics, noise characteristics, and resolution characteristics) of the X-ray transmission image of the jig (step S3E). Further, the control device 20E applies the plurality of trained models 206E to the X-ray transmission image of the jig, and specifies the image characteristics (such as resolution characteristics or the value of the luminance-to-noise ratio) of each X-ray transmission image after the plurality of trained models 206E are applied (step S4E).

Next, the control device 20E selects a trained model 206E on the basis of the results of comparison between the energy characteristics of the X-ray transmission image of the jig and the energy characteristics of the image data used to build a trained model 206E, and the degree of change in the resolution characteristics of the X-ray transmission image of the jig before and after the trained model is applied (step S5E). Here, the trained model 206E may be selected on the basis of the results of comparison between the noise characteristics of the X-ray transmission image of the jig and the noise characteristics of the image data used to build a trained model 206E, and the state of change in the resolution characteristics of the X-ray transmission image of the jig before and after the trained model is applied. In addition, in step S5E, instead of the above process, the trained model 206E with the highest luminance-to-noise ratio CNR after the trained model of the X-ray transmission image of the jig is applied may be selected.

Further, the X-ray transmission image of the subject F is acquired by setting the subject F to capture an image of the subject F in the image acquiring device 1 (step S7E). Next, the control device 20E applies the finally selected trained model 206E to the X-ray transmission image of the subject F, and thus noise removal processing is executed on the X-ray transmission image (step S8E). Finally, the control device 20E outputs an output image which is an X-ray transmission image on which noise removal processing is performed to the display device 30 (step S9E).

With the image acquiring device 1 described above, it is also possible to remove noise components while increasing signal components in an X-ray transmission image, and to effectively improve the S/N ratio in the X-ray transmission image. In addition, the image characteristics of the X-ray transmission image of the jig are specified, and a trained model to be used for noise removal is selected from the trained models built in advance on the basis of the image characteristics. Thereby, since the characteristics of the X-ray transmission image that change depending on the operating conditions or the like of the X-ray irradiator 50 in the image acquiring device 1 can be estimated, and the trained model 206E selected according to the estimation result is used for noise removal, it is possible to realize noise removal corresponding to the relationship between the luminance and noise in the X-ray transmission image. As a result, it is possible to effectively remove noise in the X-ray transmission image.

Generally, an X-ray transmission image contains noise derived from X-ray generation. Increasing the X-ray dose can also be considered to improve the S/N ratio of the X-ray transmission image, but in that case, increasing the X-ray dose results in a problem of an increase in the exposure dose of the sensor and a decrease in the life of the sensor, which leads to a decrease in the life of the X-ray source, and thus it is difficult to achieve both an improvement in the S/N ratio and a long life. In the present embodiment, since there is no need to increase the X-ray dose, it is possible to achieve both an improvement in the S/N ratio and a long life.

In the present embodiment, in selecting a trained model, the image characteristics of the X-ray transmission image of the jig are compared with the image characteristics of the image data used to build the trained model. Thereby, since the trained model 206E built by image data corresponding to the image characteristics of the X-ray transmission image of the jig is selected, it is possible to effectively remove noise in the X-ray transmission image of the subject F.

In addition, in the present embodiment, a trained model is selected using the image characteristics of an image obtained by applying the plurality of trained models 206E to the X-ray transmission image of the jig. In this case, since the trained model 206E is selected according to the image characteristics of the X-ray transmission image of the jig to which the plurality of trained models 206E are actually applied, it is possible to effectively remove noise in the X-ray transmission image of the subject F.

Particularly, in the present embodiment, energy characteristics or noise characteristics are used as image characteristics. In this case, the trained model 206E is selected which is built by images having characteristics similar to the energy characteristics or noise characteristics of the X-ray transmission image of the jig that changes depending on the imaging conditions of the image acquiring device 1. As a result, it becomes possible to remove noise in the X-ray transmission image of the subject F corresponding to a change in the conditions of the image acquiring device 1.

In the present embodiment, resolution characteristics or luminance-to-noise ratio are also used as image characteristics. According to such a configuration, by applying the selected trained model 206E, it becomes possible to obtain an X-ray transmission image with good resolution characteristics or luminance-to-noise ratio. As a result, it becomes possible to remove noise in the X-ray transmission image of the subject corresponding to a change in the conditions of the image acquiring device 1.

[Other modification examples related to first to third embodiments]

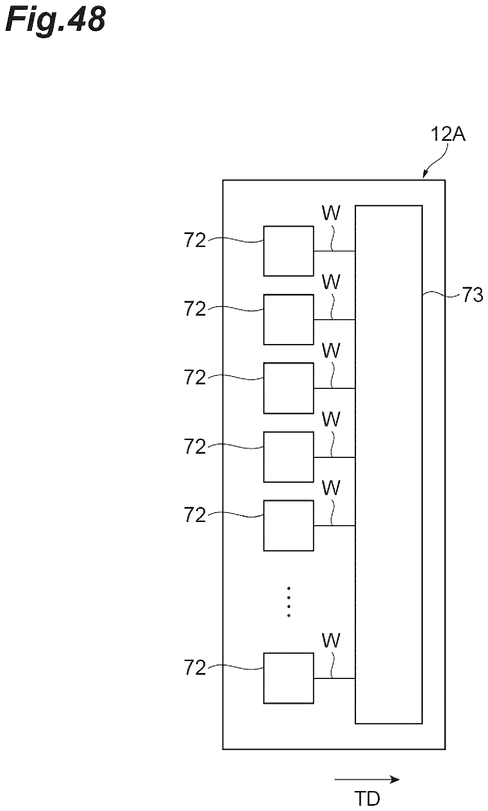

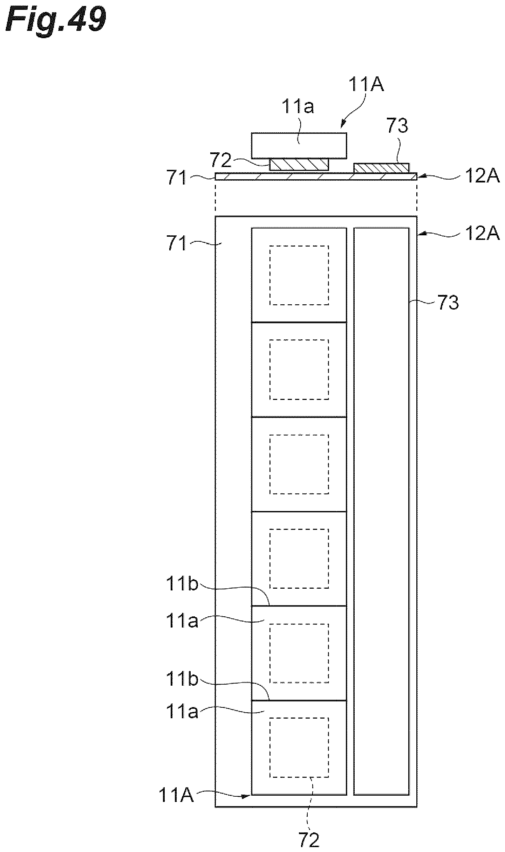

The image acquiring device 1 according to first to third embodiments may include a scan camera 12A and a scintillator layer 11A configured as follows. FIG. 48 is a plan view illustrating a configuration of the scan camera 12A according to the modification example. FIG. 49 is a diagram illustrating a configuration of the scintillator layer 11A according to the modification example disposed on the scan camera 12A, with a cross-sectional view in transport direction TD at the top and a plan view seen from the surface of the substrate 71 on the pixel 72 side at the bottom.

The scan camera 12A has N (N is an integer equal to or greater than 2) pixels 72 arrayed on the substrate 71 in a direction substantially orthogonal to the transport direction TD. For example, the number of pixels N is any integer equal to or greater than 200 and equal to or less than 30,000. The scintillator layer 11 is configured such that P (P is an integer equal to or greater than 2) rectangular scintillator units 11a disposed separately to correspond to N pixels 72 lined up in a direction substantially orthogonal to the transport direction TD and a separation unit 11b located between these scintillator units 11a are formed.

The readout circuit 73 included in the scan camera 12A of the above configuration sequentially or simultaneously receives detection signals output from the N pixels 72 at intervals of a predetermined detection period under control of the sensor control unit 13, combines the detection signals from the N pixels 72, and outputs it to the outside as a detection signal for one line of the subject F orthogonal to the transport direction TD. Additionally, the readout circuit 73 outputs a detection signal of the next one line of the subject F orthogonal to the transport direction TD by performing processing on the detection signals sequentially or simultaneously output from the N pixels 72 with a predetermined detection period shifted. In the same way, the readout circuit 73 sequentially or simultaneously outputs detection signals for a plurality of lines of the subject F orthogonal to the transport direction TD.

The above predetermined detection period may be set, for example, on the basis of the speed of the belt conveyor 60, the distance between the X-ray irradiator 50 and the subject F on the belt conveyor 60 (focus object distance (FOD)), the distance between the X-ray irradiator 50 and the scan camera 12 (focus detector distance (FDD)), and the detection interval of the pixels 72 on the subject F.

Generally, by forming the separation unit 11b that shields or reflects scintillation light, it is possible to prevent the scintillation light from entering an adjacent scintillator unit, which makes it possible to prevent a decrease in resolution. However, since the portion where the separation unit 11b is present does not contribute to the conversion of incident X-rays into scintillation light, there has also been a problem that the detection signal becomes smaller (decreases) depending on the size (area) of the separation unit 11b. A decrease in the detection signal means a decrease in the S/N ratio. Therefore, it has been difficult to achieve both an improvement in resolution and an improvement in S/N ratio using a scintillator having the separation unit 11b. On the other hand, according to the present modification example, by using the scintillator unit 11a separated corresponding to the pixel 72, it is possible to increase the resolution of the X-ray image, and to effectively improve the S/N ratio in the X-ray image.

In addition, as another modification example, the control device 20 may perform filter processing on the X-ray image and execute noise removal processing instead of inputting the X-ray image to the trained model and executing the noise removal processing. For example, the control device 20 executes edge-preserving filter processing as such filter processing. More specifically, the control device 20 executes processing using a median filter, a bilateral filter, a non local mean (NLM) filter, a total variation filter, BM3D, and the like as edge-preserving filter processing. In this case, the control device 20 may execute a combination of a plurality of types of filter processing.

According to the other modification example, it is possible to appropriately remove noise components in the X-ray image, and to further improve the S/N ratio in a radiographic image. Specifically, in a case where an X-ray image is acquired using the scan camera 12 and the scintillator layer 11 and noise removal processing is performed using edge-preserving filter processing, it can be understood that the CNR is improved approximately two times more than in a case where an X-ray image is acquired using a scintillator that integrally covers the entire scan camera 12 and noise removal processing is not performed, and that a pseudo signal is sufficiently removed in a binarized image generated by performing threshold processing. Thereby, according to the present modification example, in the application of foreign substance inspection, it is possible to prevent foreign substances from crossing each other and being detected.

In addition, the control device 20 according to the other modification example may perform edge enhancement processing on the X-ray image in addition to filter processing. For example, the control device 20 executes processing using an edge enhancement filter, unsharp mask processing, or the like as such edge enhancement processing. In this case, the control device 20 may execute a combination of a plurality of types of processing. In this case, in the X-ray image, it is possible to improve the contrast in addition to an improvement in the S/N ratio. Specifically, in a case where an X-ray image is acquired using the scan camera 12 and the scintillator layer 11 and both the edge-preserving filter processing and the edge enhancement processing are performed, it can be understood that the CNR is improved approximately four times more than in a case where an X-ray image is acquired using a scintillator that integrally covers the entire scan camera 12 and noise removal processing is not performed, and that a pseudo signal is sufficiently removed in a binarized image generated by performing threshold processing. Thereby, according to the present modification example, in the application of foreign substance inspection, it is also possible to prevent foreign substances from crossing each other and being detected.

Here, in the present embodiment, it is preferable that the imaging device includes the detection element configured such that pixel lines each having M (M is an integer equal to or greater than 2) pixels arrayed in the one direction are arrayed in N columns (N is an integer equal to or greater than 2) in a direction orthogonal to the one direction to output a detection signal related to the light for each of the pixels, and the readout circuit configured to output the radiographic image by performing addition processing on the detection signals output from at least two of the M pixels for each of the pixel lines of N columns of the detection element and outputting the N detection signals on which the addition processing is performed. In addition, in the present embodiment, it is preferable that the imaging device includes the detection element configured such that pixel lines each having M (M is an integer equal to or greater than 2) pixels arrayed in the one direction are arrayed in N columns (N is an integer equal to or greater than 2) in a direction orthogonal to the one direction to output a detection signal related to the light for each of the pixels, and the acquisition step includes outputting the radiographic image by performing addition processing on the detection signals output from at least two of the M pixels for each of the pixel lines of N columns of the detection element and outputting the N detection signals on which the addition processing is performed.

In such a configuration, the scintillation light corresponding to radiation passing through the subject is detected by the detection element in which pixel lines each having M pixels arrayed in the scanning direction of the subject are arrayed in N columns, addition processing is performed on the detection signals of at least two pixels among the detection signals of the M pixels output for each pixel line, and the N detection signals on which addition processing is performed are sequentially output, whereby a radiographic image is output. This makes it possible to effectively improve the S/N ratio in the radiographic image by increasing signal components in the radiographic image.

Further, it is also preferable that the image processing module inputs the radiographic image to a trained model built in advance through machine learning using image data and executes noise removal processing of removing noise from the radiographic image. Further, it is also preferable that the execution step includes inputting the radiographic image to a trained model built in advance through machine learning using image data and executing noise removal processing of removing noise from the radiographic image. In this case, it is possible to appropriately remove noise components in the radiographic image, and to further improve the S/N ratio in the radiographic image.

In addition, in the present embodiment, it is preferable that the trained model is built through machine learning using image data obtained by adding noise values along a normal distribution to a radiographic image of a predetermined structure as training data. This makes it easy to prepare image data which is training data used to build a trained model, and thus it is possible to efficiently build a trained model.

In addition, it is also preferable that the trained model is built through machine learning using a radiographic image obtained using the scintillator layer as training data. This makes it easy to reflect the conditions during image acquisition in the image data which is training data used to build a trained model, and thus it is possible to build a trained model that realizes appropriate noise removal.

In addition, it is also preferable that the image processing module includes a noise map generation unit configured to derive an evaluation value obtained by evaluating spread of a noise value from the pixel value of each pixel of the radiographic image on the basis of relationship data indicating a relationship between the pixel value and the evaluation value and generate a noise map that is data in which the derived evaluation value is associated with each pixel of the radiographic image, and a processing unit configured to input the radiographic image and the noise map to the trained model and execute noise removal processing of removing noise from the radiographic image. In addition, it is also preferable that the execution step includes deriving an evaluation value obtained by evaluating spread of a noise value from the pixel value of each pixel of the radiographic image on the basis of relationship data indicating a relationship between the pixel value and the evaluation value, generating a noise map that is data in which the derived evaluation value is associated with each pixel of the radiographic image, inputting the radiographic image and the noise map to the trained model, and executing noise removal processing of removing noise from the radiographic image. In this case, the evaluation value is derived from the pixel value of each image of the radiographic image on the basis of the relationship data indicating the relationship between the pixel value and the evaluation value obtained by evaluating the spread of the noise value, and a noise map that is data in which the derived evaluation value is associated with each pixel of the radiographic image is generated. The radiographic image and the noise map are input to a trained model built in advance through machine learning, and noise removal processing of removing noise from the radiographic image is executed. Thereby, noise in each pixel of the radiographic image is removed through machine learning in consideration of the spread of the noise value evaluated from the pixel value of each pixel of the radiographic image, and thus the trained model can be used to realize noise removal corresponding to the relationship between the pixel value and the spread of noise in the radiographic image. As a result, it is possible to effectively remove noise in the radiographic image.

Further, it is preferable that the image processing module includes an input unit configured to accept an input of condition information indicating either conditions of a source of radiation or imaging conditions when the radiation is radiated to capture an image of a subject, a calculation unit configured to calculate average energy related to the radiation passing through the subject on the basis of the condition information, and a narrowing-down unit configured to narrow down trained models to be used for the noise removal processing from a plurality of trained models each built in advance through machine learning using image data on the basis of the average energy. In addition, it is also preferable that the execution step includes accepting an input of condition information indicating either conditions of a source of radiation or imaging conditions when the radiation is radiated to capture an image of a subject, calculating average energy related to the radiation passing through the subject on the basis of the condition information, and narrowing down trained models to be used for the noise removal processing from a plurality of trained models each built in advance through machine learning using image data on the basis of the average energy. In this case, the average energy of the radiation passing through the subject is calculated on the basis of the conditions of the radiation source or the imaging conditions when the radiographic image of the subject is acquired. The candidates for trained models used for noise removal are narrowed down from the trained models built in advance on the basis of the average energy. Thereby, since a trained model corresponding to the average energy of the radiation which is an imaging target is used for noise removal, it is possible to realize noise removal corresponding to the relationship between the luminance and noise in the radiographic image. As a result, it is possible to effectively remove noise in the radiographic image.

In addition, it is also preferable that the image processing module includes a specification unit configured to specify image characteristics of a radiographic image acquired by the imaging device for a jig, a selection unit configured to select a trained model from a plurality of trained models each built in advance through machine learning using image data on the basis of the image characteristics, and a processing unit configured to execute the noise removal processing using the selected trained model. In addition, it is also preferable that the execution step includes specifying image characteristics of a radiographic image acquired for a jig, selecting a trained model from a plurality of trained models each built in advance through machine learning using image data on the basis of the image characteristics, and executing the noise removal processing using the selected trained model. With such a configuration, the image characteristics of the radiographic image of the jig are specified, and a trained model to be used for noise removal is selected from the trained models built in advance on the basis of the image characteristics. This makes it possible to estimate the characteristics of the radiographic image that change depending on the conditions of the radiation source or the like in the system, and the trained model selected according to the estimation result is used for noise removal, whereby it is possible to realize noise removal corresponding to the relationship between the luminance and noise in the radiographic image. As a result, it is possible to effectively remove noise in the radiographic image.

In addition, it is also preferable that the image processing module performs filter processing on the radiographic image and executes noise removal processing of removing noise from the radiographic image. In addition, it is also preferable that the execution step includes performing filter processing on the radiographic image and executing noise removal processing of removing noise from the radiographic image. With such a configuration, it is possible to appropriately remove noise components in the radiographic image, and to further improve the S/N ratio in the radiographic image.

Further, it is also preferable that the image processing module performs edge enhancement processing on the radiographic image in addition to the filter processing. Further, it is also preferable that the execution step includes performing edge enhancement processing on the radiographic image in addition to the filter processing. In this case, in the radiographic image, it is possible to improve the contrast in addition to an improvement in S/N ratio.

## Reference Signs List

1 Image acquiring device (radiographic image acquiring device, radiographic image acquiring system)
10 X-ray detection camera (imaging device)
11, 11A Scintillator layer
11a Scintillator unit
11b Separation unit
12, 12A Scan camera
20, 20A to 20E Control device (image processing module)
50 X-ray irradiator (radiation source)
60 Belt conveyor (transport device)
72 Pixel (detection element)
74 Pixel line (pixel group)

73 Readout circuit
201, 201C Input unit
202, 202A, 202C, 202D Calculation unit
202E Specification unit
203C, 203D Narrowing-down unit
204, 204A, 204B Noise map generation unit
204C, 204E Selection unit
205, 205C, 205E Processing unit
206C, 206E, 207 Trained model
F Subject
TD Transport direction (one direction)

## Claims

1. A radiographic image acquiring device comprising:

   an imaging device configured to scan radiation passing through a subject in one direction and capture an image of the radiation to acquire a radiographic image;
   a scintillator layer provided on the imaging device to convert the radiation into light; and
   an image processing module configured to execute noise removal processing of removing noise from the radiographic image,
   wherein the imaging device includes
   N (N is an integer equal to or greater than 2) detection elements arrayed in a direction orthogonal to the one direction to detect the light and output detection signals, and
   a readout circuit configured to output the radiographic image by outputting the detection signal for each of the N detection elements, and
   the scintillator layer includes
   P (P is an integer equal to or greater than 2) scintillator units disposed separately to correspond to the N detection elements, and
   a separation unit disposed between the P scintillator units.

2. The radiographic image acquiring device according to claim 1, wherein the imaging device includes

   the detection element configured such that pixel lines each having M (M is an integer equal to or greater than 2) pixels arrayed in the one direction are arrayed in N columns (N is an integer equal to or greater than 2) in a direction orthogonal to the one direction to output a detection signal related to the light for each of the pixels, and
   the readout circuit configured to output the radiographic image by performing addition processing on the detection signals output from at least two of the M pixels for each of the pixel lines of N columns of the detection element and outputting the N detection signals on which the addition processing is performed.

3. The radiographic image acquiring device according to claim 1 or 2, wherein the image processing module inputs the radiographic image to a trained model built in advance through machine learning using image data and executes noise removal processing of removing noise from the radiographic image.

4. The radiographic image acquiring device according to claim 3, wherein the trained model is built through machine learning using image data obtained by adding noise values along a normal distribution to a radiographic image of a predetermined structure as training data.

5. The radiographic image acquiring device according to claim 3, wherein the trained model is built through machine learning using a radiographic image obtained using the scintillator layer as training data.

6. The radiographic image acquiring device according to any one of claims 3 to 5, wherein the image processing module includes

   a noise map generation unit configured to derive an evaluation value obtained by evaluating spread of a noise value from the pixel value of each pixel of the radiographic image on the basis of relationship data indicating a relationship between the pixel value and the evaluation value and generate a noise map that is data in which the derived evaluation value is associated with each pixel of the radiographic image, and
a processing unit configured to input the radiographic image and the noise map to the trained model and execute noise removal processing of removing noise from the radiographic image.

7. The radiographic image acquiring device according to any one of claims 3 to 5, wherein the image processing module includes

an input unit configured to accept an input of condition information indicating either conditions of a source of radiation or imaging conditions when the radiation is radiated to capture an image of a subject,
a calculation unit configured to calculate average energy related to the radiation passing through the subject on the basis of the condition information, and
a narrowing-down unit configured to narrow down trained models to be used for the noise removal processing from a plurality of trained models each built in advance through machine learning using image data on the basis of the average energy.

8. The radiographic image acquiring device according to any one of claims 3 to 5, wherein the image processing module includes

a specification unit configured to specify image characteristics of a radiographic image acquired by the imaging device for a jig,
a selection unit configured to select a trained model from a plurality of trained models each built in advance through machine learning using image data on the basis of the image characteristics, and
a processing unit configured to execute the noise removal processing using the selected trained model.

9. The radiographic image acquiring device according to claim 1 or 2, wherein the image processing module performs filter processing on the radiographic image and executes noise removal processing of removing noise from the radiographic image.

10. The radiographic image acquiring device according to claim 9, wherein the image processing module performs edge enhancement processing on the radiographic image in addition to the filter processing.

11. A radiographic image acquiring system comprising:

the radiographic image acquiring device according to any one of claims 1 to 10;
a source configured to irradiate the subject with radiation; and
a transport device configured to transport the subject in the one direction with respect to the imaging device.

12. A radiographic image acquisition method comprising:

a step of scanning scintillation light corresponding to radiation passing through a subject in one direction and capturing an image of the scintillation light to acquire a radiographic image; and
a step of executing noise removal processing of removing noise from the radiographic image,
wherein the acquisition step includes outputting the radiographic image by using an imaging device including N (N is an integer equal to or greater than 2) detection elements arrayed in a direction orthogonal to the one direction to detect the light and output detection signals, and a scintillator layer for converting the radiation into light which includes P (P is an integer equal to or greater than 2) scintillator units disposed separately to correspond to the N detection elements and a separation unit disposed between the P scintillator units, to output the detection signal for each of the N detection elements.

13. The radiographic image acquisition method according to claim 12, wherein the imaging device includes the detection element configured such that pixel lines each having M (M is an integer equal to or greater than 2) pixels arrayed in the one direction are arrayed in N columns (N is an integer equal to or greater than 2) in a direction orthogonal to the one direction to output a detection signal related to the light for each of the pixels, and
the acquisition step includes outputting the radiographic image by performing addition processing on the detection signals output from at least two of the M pixels for each of the pixel lines of N columns of the detection element and outputting the N detection signals on which the addition processing is performed.

14. The radiographic image acquisition method according to claim 12 or 13, wherein the execution step includes inputting the radiographic image to a trained model built in advance through machine learning using image data and executing noise removal processing of removing noise from the radiographic image.

15. The radiographic image acquisition method according to claim 14, wherein the trained model is built through machine learning using image data obtained by adding noise values along a normal distribution to a radiographic image of a predetermined structure as training data.

16. The radiographic image acquisition method according to claim 14, wherein the trained model is built through machine learning using a radiographic image obtained using the scintillator layer as training data.

17. The radiographic image acquisition method according to any one of claims 14 to 16, wherein the execution step includes deriving an evaluation value obtained by evaluating spread of a noise value from the pixel value of each pixel of the radiographic image on the basis of relationship data indicating a relationship between the pixel value and the evaluation value, generating a noise map that is data in which the derived evaluation value is associated with each pixel of the radiographic image, inputting the radiographic image and the noise map to the trained model, and executing noise removal processing of removing noise from the radiographic image.

18. The radiographic image acquisition method according to any one of claims 14 to 16, wherein the execution step includes accepting an input of condition information indicating either conditions of a source of radiation or imaging conditions when the radiation is radiated to capture an image of a subject, calculating average energy related to the radiation passing through the subject on the basis of the condition information, and narrowing down trained models to be used for the noise removal processing from a plurality of trained models each built in advance through machine learning using image data on the basis of the average energy.

19. The radiographic image acquisition method according to any one of claims 14 to 16, wherein the execution step includes specifying image characteristics of a radiographic image acquired for a jig, selecting a trained model from a plurality of trained models each built in advance through machine learning using image data on the basis of the image characteristics, and executing the noise removal processing using the selected trained model.

20. The radiographic image acquisition method according to claim 12 or 13, wherein the execution step includes performing filter processing on the radiographic image and executing noise removal processing of removing noise from the radiographic image.

21. The radiographic image acquisition method according to claim 20, wherein the execution step includes performing edge enhancement processing on the radiographic image in addition to the filter processing.

22. The radiographic image acquisition method according to any one of claims 12 to 21, further comprising:

a step of irradiating the subject with radiation; and
a step of transporting the subject in the one direction with respect to the detection element.

*Fig.1*

EP 4 357 818 A1

*Fig.2*

# *Fig.3*

# Fig.4

**Fig.5**

CONTROL DEVICE — 20

- 201 INPUT UNIT
- 202 CALCULATION UNIT
- 203 IMAGE ACQUISITION UNIT
- 204 NOISE MAP GENERATION UNIT
- 205 PROCESSING UNIT
- 206 BUILDING UNIT

207 TRAINED MODEL

**Fig.6**

# Fig.7

Fig.8

G1

207

TRAINED MODEL

G6

G5

Fig.9

G7

# Fig.10

```
                    ( START )
                        │
        ┌───────────────┤
        │               ▼
        │   ┌───────────────────────────────┐
        │   │   GENERATE STRUCTURE IMAGE     │──S301
        │   └───────────────────────────────┘
        │               │
     ┌──┼───────────────┤
     │  │               ▼
     │  │   ┌───────────────────────────────┐
     │  │   │     CALCULATE SIGMA VALUE      │──S302
     │  │   └───────────────────────────────┘
     │  │               │
     │  │               ▼
     │  │   ┌───────────────────────────────┐
     │  │   │     SET NOISE DISTRIBUTION     │──S303
     │  │   └───────────────────────────────┘
     │  │               │
     │  │               ▼
     │  │   ┌───────────────────────────────┐
     │  │   │     CALCULATE NOISE VALUE      │──S304
     │  │   └───────────────────────────────┘
     │  │               │
     │  │               ▼
     │  │   ┌───────────────────────────────┐
     │  │   │   CALCULATE PIXEL VALUE OF     │──S305
     │  │   │        TRAINING DATA           │
     │  │   └───────────────────────────────┘
     │  │               │
     │  │ YES           ▼                        S306
     │  └────◇ ARE THERE OTHER PIXELS? ◇────
     │                  │ NO
     │                  ▼
     │      ┌───────────────────────────────┐
     │      │  GENERATE TRAINING IMAGE DATA  │──S307
     │      └───────────────────────────────┘
     │                  │
     │  YES             ▼                        S308
     └────────◇    IS OTHER          ◇────
                  TRAINING IMAGE DATA
                      REQUIRED?
                        │ NO
                        ▼
                    ( END )
```

# Fig.11

START OBSERVATION PROCESSING

BUILD TRAINED MODEL — S100

INPUT CONDITION INFORMATION — S101

CALCULATE AVERAGE ENERGY — S102

ACQUIRE RADIATION TRANSMISSION IMAGE — S103

GENERATE NOISE MAP — S104

EXECUTE NOISE REMOVAL PROCESSING ON RADIATION IMAGE — S105

OUTPUT RADIATION IMAGE — S106

END

# Fig.12

EP 4 357 818 A1

# Fig.13

```
( START OBSERVATION PROCESSING )
            │
┌─────────────────────────────────────┐
│        BUILD TRAINED MODEL          │──S100
└─────────────────────────────────────┘
            │
┌─────────────────────────────────────┐
│  ACQUIRE RADIATION TRANSMISSION IMAGE │──S103
└─────────────────────────────────────┘
            │
┌─────────────────────────────────────┐
│      INPUT CONDITION INFORMATION     │──S101
└─────────────────────────────────────┘
            │
┌─────────────────────────────────────┐
│      CALCULATE AVERAGE ENERGY        │──S102A
└─────────────────────────────────────┘
            │
┌─────────────────────────────────────┐
│         GENERATE NOISE MAP           │──S104A
└─────────────────────────────────────┘
            │
┌─────────────────────────────────────┐
│   EXECUTE NOISE REMOVAL PROCESSING   │──S105
│    ON RADIATION TRANSMISSION IMAGE   │
└─────────────────────────────────────┘
            │
┌─────────────────────────────────────┐
│  OUTPUT RADIATION TRANSMISSION IMAGE │──S106
└─────────────────────────────────────┘
            │
          ( END )
```

*Fig.14*

(a) G14 ENERGY

(b) G15 ENERGY

(c) G16 ENERGY

(d) G17 ENERGY

# Fig.15

| SPECTRUM | G14 | G15 | G16 | G17 |
|---|---|---|---|---|
| THICKNESS | 0mm | 10mm | 20mm | 30mm |
| AVERAGE ENERGY | 17keV | 24keV | 26keV | 27keV |
| TRANSMITTANCE | 1 | 0.4 | 0.2 | 0.1 |

# Fig.16

## Fig.17

*Fig.18*

**Fig.19**

## Fig.20

**Fig.21**

# Fig.22

```
        ( START OBSERVATION PROCESSING )
                      │
    ┌─────────────────────────────────────┐
    │         BUILD TRAINED MODEL          │──S100
    └─────────────────────────────────────┘
                      │
    ┌─────────────────────────────────────┐
    │          ACQUIRE JIG IMAGE           │──S201
    └─────────────────────────────────────┘
                      │
    ┌─────────────────────────────────────┐
    │  ACQUIRE RADIATION TRANSMISSION IMAGE │──S103
    └─────────────────────────────────────┘
                      │
    ┌─────────────────────────────────────┐
    │         GENERATE NOISE MAP           │──S202
    └─────────────────────────────────────┘
                      │
    ┌─────────────────────────────────────┐
    │  EXECUTE NOISE REMOVAL PROCESSING ON  │──S105
    │     RADIATION TRANSMISSION IMAGE      │
    └─────────────────────────────────────┘
                      │
    ┌─────────────────────────────────────┐
    │  OUTPUT RADIATION TRANSMISSION IMAGE  │──S106
    └─────────────────────────────────────┘
                      │
                   ( END )
```

Fig.23

EP 4 357 818 A1

# *Fig.24*

P1

*Fig.25*

G26

# Fig.26

CONTROL DEVICE  20C

- 201C — INPUT UNIT
- 202C — CALCULATION UNIT
- 203C — NARROWING-DOWN UNIT
- 204C — SELECTION UNIT
- 205C — PROCESSING UNIT

TRAINED MODEL  206C

EP 4 357 818 A1

Fig.27

*Fig.28*

*Fig.29*

# Fig.30

Fig.31

*Fig.32*

# Fig.33

P2

P1

EP 4 357 818 A1



*Fig.34*

*Fig.35*

( START OBSERVATION PROCESSING )

INPUT CONDITION INFORMATION — S1

CALCULATE AVERAGE ENERGY — S2

SPECIFY AVERAGE ENERGY CORRESPONDING TO TRAINED MODEL — S3

IS THERE NEXT MODEL? — S4

YES

NO

NARROW DOWN CANDIDATE FOR TRAINED MODEL — S5

CAPTURE IMAGE OF JIG — S6

CALCULATE IMAGE CHARACTERISTICS — S7

SELECT TRAINED MODEL BASED ON IMAGE CHARACTERISTICS — S8

CAPTURE IMAGE OF SUBJECT AND ACQUIRE X-RAY TRANSMISSION IMAGE — S9

EXECUTE NOISE REMOVAL PROCESSING ON X-RAY TRANSMISSION IMAGE — S10

OUTPUT X-RAY TRANSMISSION IMAGE — S11

( END )

Fig.36

EP 4 357 818 A1

## Fig.37

```
        ( START OBSERVATION PROCESSING )
                        │
        ┌───────────────────────────────┐
        │   INPUT CONDITION INFORMATION  │───S1
        └───────────────────────────────┘
                        │
        ┌───────────────────────────────┐
        │    CALCULATE AVERAGE ENERGY    │───S2
        └───────────────────────────────┘
                        │
          ┌─────────────┤
          │             │
        ┌───────────────────────────────┐
        │      SPECIFY AVERAGE ENERGY    │───S3
        │  CORRESPONDING TO TRAINED MODEL│
        └───────────────────────────────┘
                        │
    YES ◇───────────────────────────────◇───S4
          │      IS THERE NEXT MODEL?
          └── NO
                        │
        ┌───────────────────────────────┐
        │    NARROW DOWN CANDIDATE FOR   │───S5
        │         TRAINED MODEL          │
        └───────────────────────────────┘
                        │
        ┌───────────────────────────────┐
        │   CAPTURE IMAGE OF SUBJECT AND │───S9
        │  ACQUIRE X-RAY TRANSMISSION IMAGE│
        └───────────────────────────────┘
                        │
        ┌───────────────────────────────┐
        │  EXECUTE NOISE REMOVAL PROCESSING│───S10
        │     ON X-RAY TRANSMISSION IMAGE  │
        └───────────────────────────────┘
                        │
        ┌───────────────────────────────┐
        │  OUTPUT X-RAY TRANSMISSION IMAGE │───S11
        └───────────────────────────────┘
                        │
                    ( END )
```

## Fig.38

EP 4 357 818 A1

*Fig.39*

Fig.40

# Fig.41

## Fig.42

# Fig.43

# Fig.44

(a)

(b)

# Fig.45

P2

P1

*Fig.46*

# Fig.47

```
( START OBSERVATION PROCESSING )
            │
┌───────────────────────────────────────┐
│        SET IMAGING CONDITION          │ ~S1E
└───────────────────────────────────────┘
            │
┌───────────────────────────────────────┐
│         CAPTURE IMAGE OF JIG          │ ~S2E
└───────────────────────────────────────┘
            │
┌───────────────────────────────────────┐
│  SPECIFY IMAGE CHARACTERISTICS OF     │ ~S3E
│     X-RAY TRANSMISSION IMAGE          │
└───────────────────────────────────────┘
            │
┌───────────────────────────────────────┐
│  SPECIFY IMAGE CHARACTERISTICS OF     │ ~S4E
│  X-RAY TRANSMISSION IMAGE AFTER       │
│     TRAINED MODEL IS APPLIED          │
└───────────────────────────────────────┘
            │
┌───────────────────────────────────────┐
│    SELECT TRAINED MODEL BASED ON      │ ~S5E
│ ENERGY CHARACTERISTICS + RESOLUTION   │
│     CHARACTERISTICS OR BASED ON       │
│ NOISE CHARACTERISTICS + RESOLUTION    │
│         CHARACTERISTICS               │
└───────────────────────────────────────┘
            │
┌───────────────────────────────────────┐
│    CAPTURE IMAGE OF SUBJECT AND       │ ~S7E
│  ACQUIRE X-RAY TRANSMISSION IMAGE     │
└───────────────────────────────────────┘
            │
┌───────────────────────────────────────┐
│  EXECUTE NOISE REMOVAL PROCESSING     │ ~S8E
│    ON X-RAY TRANSMISSION IMAGE        │
└───────────────────────────────────────┘
            │
┌───────────────────────────────────────┐
│   OUTPUT X-RAY TRANSMISSION IMAGE     │ ~S9E
└───────────────────────────────────────┘
            │
         (  END  )
```

# Fig.48

# Fig.49

## INTERNATIONAL SEARCH REPORT

| International application No. |
|---|
| **PCT/JP2022/017170** |

**A.    CLASSIFICATION OF SUBJECT MATTER**

*G01T 1/20*(2006.01)i; *G01N 23/04*(2018.01)i
FI:    G01N23/04; G01T1/20 E; G01T1/20 G

According to International Patent Classification (IPC) or to both national classification and IPC

**B.    FIELDS SEARCHED**

Minimum documentation searched (classification system followed by classification symbols)

G01N23/00-G01N23/2276, G01T1/00-G01T1/40

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII)

**C.    DOCUMENTS CONSIDERED TO BE RELEVANT**

| Category* | Citation of document, with indication, where appropriate, of the relevant passages | Relevant to claim No. |
|---|---|---|
| Y | WO 2019/082276 A1 (SYSTEM SQUARE INC.) 02 May 2019 (2019-05-02) paragraphs [0030]-[0046], fig. 1-3 | 1-5, 9-16, 20-22 |
| A | | 6-8, 17-19 |
| Y | WO 2020/031984 A1 (BLUE TAG CO., LTD.) 13 February 2020 (2020-02-13) paragraphs [0026], [0031], [0052], [0053], fig. 1 | 1-5, 9-16, 20-22 |
| Y | WO 2013/069353 A1 (HAMAMATSU PHOTONICS KK) 16 May 2013 (2013-05-16) paragraph [0044], fig. 6 | 1-5, 9-16, 20-22 |
| Y | JP 2018-206382 A (KABUSHIKI KAISHA TOSHIBA) 27 December 2018 (2018-12-27) paragraph [0052] | 4, 15 |
| Y | JP 2004-069384 A (ANRITSU CORP.) 04 March 2004 (2004-03-04) claim 1 | 9-10, 20-21 |
| Y | JP 2009-192519 A (ANRITSU SANKI SYSTEM CO., LTD.) 27 August 2009 (2009-08-27) paragraph [0072] | 9-10, 20-21 |

☐ Further documents are listed in the continuation of Box C.        ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 May 2022** | **31 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/017170**

| Patent document cited in search report | | | Publication date (day/month/year) | Patent family member(s) | | | Publication date (day/month/year) |
|---|---|---|---|---|---|---|---|
| WO | 2019/082276 | A1 | 02 May 2019 | US paragraphs [0039]-[0058], fig. 1-3 EP CN | 2020/0241150 3702745 111263882 | A1 A1 A | |
| WO | 2020/031984 | A1 | 13 February 2020 | (Family: none) | | | |
| WO | 2013/069353 | A1 | 16 May 2013 | (Family: none) | | | |
| JP | 2018-206382 | A | 27 December 2018 | US paragraph [0072] EP | 2018/0349759 3410392 | A1 A1 | |
| JP | 2004-069384 | A | 04 March 2004 | (Family: none) | | | |
| JP | 2009-192519 | A | 27 August 2009 | (Family: none) | | | |

Form PCT/ISA/210 (patent family annex) (January 2015)

**REFERENCES CITED IN THE DESCRIPTION**

**Patent documents cited in the description**

- WO 2019082276 A
- JP 2019158663 A
- JP 2001099941 A
- JP 2003167060 A

**Non-patent literature cited in the description**

- **KAI ZHANG.** *Beyond a Gaussian Denoiser: Residual Learning of Deep CNN for Image Denoising*